# EUROPEAN PATENT APPLICATION

(11) **EP 2 278 539 A1**
(43) Date of publication of application: **26.01.2011**
(21) Application number: 09461512.7
(22) Date of filing: 17.07.2009
(51) Int. Cl.: G06Q 20/00

(54) **Method for performing financial operations and mobility account system**

(71) Applicant: Hundt, Tomasz, 90411 Nürnberg (DE)
(72) Inventor: Hundt, Tomasz, 90411 Nürnberg (DE)
(74) Representative: Hudy, Ludwik

(57) **Abstract**

In a method for performing financial operations by using an initiating mobile device with integrated sender and receiver functions, which communicates with a beneficing device with integrated receiver function and optional sender function and uses a Mobile Network Operator Client (BSF Client) to work within a mobile operator network and is able to communicate with financial services environments by using an Mobility Account System application residing in a central unit, which is able to communicate with the Mobility Account System Client (mC Client) of the initiating mobile device and the Mobility Account System Client (mC Client) of the beneficing device to perform the financial operations, a financial operation is initiated by taking possession of mC client identity data and the transaction data of the initiating mobile device and of the beneficing device. In parallel, the initiating mobile device and optionally the beneficing device are connected to the mobile operator networks, a session key and an associated session ID for performing encryption and decryption process of secured communication channel is requested and a secured channel for performing the financial operation using the session key materials is set up. After authorization of the initiating mobile device and of the beneficing device, a transaction title of the financial operation is generated for the initiating mobile device and the beneficing device. The financial operation using the transaction ID is performed when all authorizations are positive and is confirmed at least by a user of the initiating mobile device. The transaction is completed after sending confirmation to the initiating mobile device and the beneficing device.

## Description

The invention relates to a method for performing financial operations, especially used for making payment transaction, as well as a mobility account system.

Today the mobile payment service has huge technological and market potential. Firstly by offering more technological advantages in comparison to a currently obsolete electronic payment network, secondly by offering opportunities to access wider markets. The mobile payment technology is driven by two main factors: maturity of mobile infrastructure (rapidly growing 3G/3.5G coverage but still not bringing sufficient profits from 3G/3.5G services) and the specific mobile market situation. The mobile payment service may be seen as a specific cooperation between Mobile Network Operators (MNOs), the financial institution with common support to the mobile transaction platform. There is a sensible factor of a new supply chain related to the reliable processes and security capabilities and the successful implementation strongly depends on consumer confidence. In this respect, all the business partners from the first day on, need to cooperate closely providing a high quality customized service and a high security level to avoid theft of sensible customer data and its unauthorized use.

The aforementioned problem is partially solved by a mobile device provided with a secure chip and a short-range wireless radio-frequency (RF) communication module described in the US Application Publication No. 2008/0207124 A1 titled MOBILE DEVICE WITH NEAR FIELD COMMUNICATION (NFC) MODULE AND SECURE CHIP. The mobile device described in the mentioned publication can be used for contactless transactions with external short-range wireless RF communication devices, for example at a Point of Sales. This mobile device is provided with user selectable activity levels of the secure chip to reduce security risks/concerns associated with such a terminal. The user selectable activity levels may include levels in which the secure chip is deactivated by default, and only temporarily activated upon user confirmation or the entry of a password or Personal Identification Number (PIN).

In turn, the US Patent Application Publication No. 2008/0219227 A1 titled METHOD AND APPARATUS TO CREATE MULTICAST GROUPS BASED ON PROXIMITY discusses devices and methods that use close range communication links, such as NFC protocol links, to enable users to authenticate mobile devices to one another to create or expand secure multicast groups. Once the two or more devices establish a close range communication peer-to-peer link the devices exchange multicast group communication data sufficient to permit the devices to receive or send multicast messages. Long range wireless or wired network communication links are then used for multicast message communications. Proximity limits of the close range communication peer-to-peer link enables mutual trust to be presumed among devices, reducing the need for security and authentication signaling. The limited range of close range communication peer-to-peer links renders multicast groups established in this manner less vulnerable to eavesdropping and intrusion. Embodiments enable users to initiate secure multicast group participation merely by bringing two or more devices into close proximity.

The functionality of communicating data between the mobile device with the NFC module and other devices provided also with NFC modules is highly appreciated by the users when the data is exchanged. However, providers may object to the possibility of storing unsecured data by unauthorized users.

Therefore, there exists a need for providing a mobility account system with mobile devices which comprises NFC modules, which would enable secure exchange of communication or data with other devices provided also with NFC modules.

The idea of this invention is a method for making financial operations by using an initiating mobile device with integrated sender and receiver functions and communicating with a beneficing device with integrated receiver function and optional sender function, from which at least the initiating mobile device has a Mobility Account System Client (mC Client), a Mobile Network Operator Client (BSF Client), and a Near Field Communication module (NFC module) and works within a mobile operator network, and each communicating with financial services environments whereby the method is performed by using an Mobility Account System application residing in a central unit, which is able to communicate with the Mobility Account System Client of the initiating mobile device and the Mobility Account System Client of the beneficing device to perform the financial operations. Preferably, the method comprises following steps: activating the mC client in the initiating mobile device and in the beneficing device, preparing a financial operation by loading the mC client identity data and collecting the transaction data of the initiating mobile device and of the beneficing device, initiating a financial operation by taking possession of the mC client identity data and the transaction data of the initiating mobile device and of the beneficing device, authorizing financial operation by the initiating mobile device, authorizing the initiating mobile device and optionally the beneficing device in the mobile operator network, requesting a session key and an associated session ID for performing encryption and decryption process of secured communication channel, setting up a secured channel for performing the financial operation using the session key and the associated session ID, providing an actual session data of the initiating mobile device and the beneficing device, exchanging mC client identity data and the transaction data between the initiating mobile device and its financial service environment and between the beneficing device and its financial service environment, authorizing the initiating mobile device and the beneficing device into the transaction services environments, proofing the geographical location of the initiating mobile device and optionally the beneficing device if feature activated by the users, generating a transaction title of the financial operation for the initiating mobile device and for the beneficing device, exchanging mC client identity data and the transaction data of the initiating mobile device and of the beneficing device within the transaction services environments using a unique transaction ID, checking an additional transaction parameters, confirming the financial operation by at least the initiating mobile device, completing the financial operation when the transaction authorizations are positive, sending confirmation to the initiating mobile device and to the beneficing device that the financial operation is completed, updating a satisfaction index of the initiating mobile device, storing data of the performed financial operation of the initiating mobile device and of the beneficing device, providing new transaction ID to the initiating mobile device as well as checking the advertising inbox of initiating mobile device for new advertisements and terminating transaction session of the initiating mobile device and of the beneficing device to the transaction service environments.

Preferably, the initiating mobile device and the beneficing device are mobile handsets or the initiating mobile device is a mobile handset and the beneficing device is an external stationary device, preferably a PC or a network server.

It is advantageous when a session key and an associated session ID are requested from a BSF server for each valid session of the financial operation.

Preferably, before the connecting of the initiating mobile device and optionally of the beneficing device to the mobile operator network the PIN of an mC client is entered using alphanumeric keys of the initiating mobile device and optionally of the beneficing device.

It is favorable that the exchanging individual transaction data and mC clients identity data of the initiating mobile device and the beneficing device between the initiating mobile device and the beneficing device, is performed either via Near Field Communication modules of the initiating mobile device and the beneficing device or manual entering.

It is favorable that the transaction title of the financial operation is generated by taking the transaction data and mC client user data from the MAS database, an additional unique ID of the involved users, and a ZIP code of the involved users, and either an age tag and latest sender satisfaction index or a sales category, and date and time of the current transaction session, and a current transaction ID.

Preferably, during the confirmation of the transaction operation, transaction data and the mC clients user identity are received from the initiating mobile device and the beneficing device, downloaded from the database and generated during transaction process and then are compared.

During the confirmation of the transaction operation, photos/logo with embedded text containing public identity of the initiating mobile device and the beneficing device can be uploaded to the initiating mobile device and optionally to the beneficing device and confirmed by the involved users of the initiating mobile device and optionally the beneficing device, and the authorization of an additional transaction parameters of the beneficing device are proofed if required by the user.

Preferably, the money transfer request is submitted to the Clearing and Settlement Mechanism module (CSM module) when authorization of the mC Client as the sender, and authorization of the mC Client as the receiver, and proofing of sender transaction authorization PIN, and proofing the reference cell ID of the geographical service of the receiver if activated by user, and optionally proofing and the reference cell ID of the geographical service of the sender if activated by user, and the comparison of transaction data and user data received via sender path and downloaded from the database of the sender path with the transaction data and user data received via receiver path and downloaded from the database of the receiver path, and authorization of the receiver photo/logo with embedded text containing receiver public identity confirmed by sender, and optionally authorization of sender photo with embedded text containing sender public identity confirmed by receiver, and the authorization of additional transaction parameters requested by receiver are positive.

The idea of this invention is also a mobility account system for making financial operations for performing steps of method described above.

In addition, the idea of the invention is a mobility account system for performing financial operations by using an initiating mobile device with integrated sender and receiver functions and communicating with a beneficing device with integrated receiver function and optional sender function, each having a Mobility Account System Client and a Near Field Communication module, and each working with a mobile operator network being able to communicate with the services environments by using an Mobility Account System application, which is able to communicate with the Mobility Account System Client of the initiating mobile device and the Mobility Account System Client of the beneficing device to perform the financial operations. The initiating mobile device and the beneficing device of this system, in addition to the Mobility Account System Client and the Near Field Communication module, have a BSF Client for authorizing the mobile device in the mobile operator network and providing a session key and an associated session ID for setting up secured channel connection in cooperation with the Mobility Account System application for transmitting the users identity data and transaction unique data enabling the financial operation to be performed.

Preferably, the sender and receiver functions are realized by a key-board with a Sender-key (S-key) and a Receiver-key (R-key) and a graphical user interface.

It is favorable that the transaction title of the financial operation comprises data of transaction and data of the users of the initiating mobile device and the beneficing device taken from MAS database, either an additional unique ID (Add ID) of the sender or an additional unique ID (Add ID) of the receiver, and either ZIP code of the sender user or ZIP code of the receiver user, and either an age tag and sender satisfaction index of the sender user or the sales category of the receiver user, and the current transaction ID consisting of an internal transaction counter per MAS application, and date and time of the current transaction session.

The mobility account system, as presented, offers more technological and security advantages compared to existing bank and payment services, and brings new mobility opportunities to immediately access wider markets. Due to usage of existing mobile infrastructure (2.5G/3G/3.5G networks) the MAS application could be introduced quickly into the market.

The invention will now be described by way of example and with reference to the accompanying drawings in which:
Fig. 1 shows a general embodiment of a mobility account system;
Figs. 2A and 2B show a detailed architecture of the mobility account system;
Fig. 3 shows communication signals exchanged between a mobile handset and a mC module;
Fig. 4A shows structure of user equipment;
Fig. 4B shows variables stored in user equipment;
Fig. 5 shows a structure of a banks system;
Fig. 6A shows a structure of a Mobility Account System Client (mC client) flow chart for performing a financial operation in the transaction variants proposed.
Fig. 6B shows a structure of a Mobile Network Operator Client (BSF client) flow chart for performing a financial operation in the transaction variants proposed;
Figs. 7A, 7B, 7C, 7D, 7E, 7F and 7G show a flow chart of a first variant of a handset-to-handset or handset-to-Point of Sales device procedure; and
Figs. 8A, 8B, 8C, 8D, 8E and 8F show a flow chart of a second variant of a handset-to-an external stationary device procedure.

The embodiments presented in the drawings are intended only for illustrative purpose and do not limit the scope of the invention, as defined by the accompanying claims. Equivalent elements on all drawings are labeled by the same numerical references or references of which the first digit refers to the figure number.

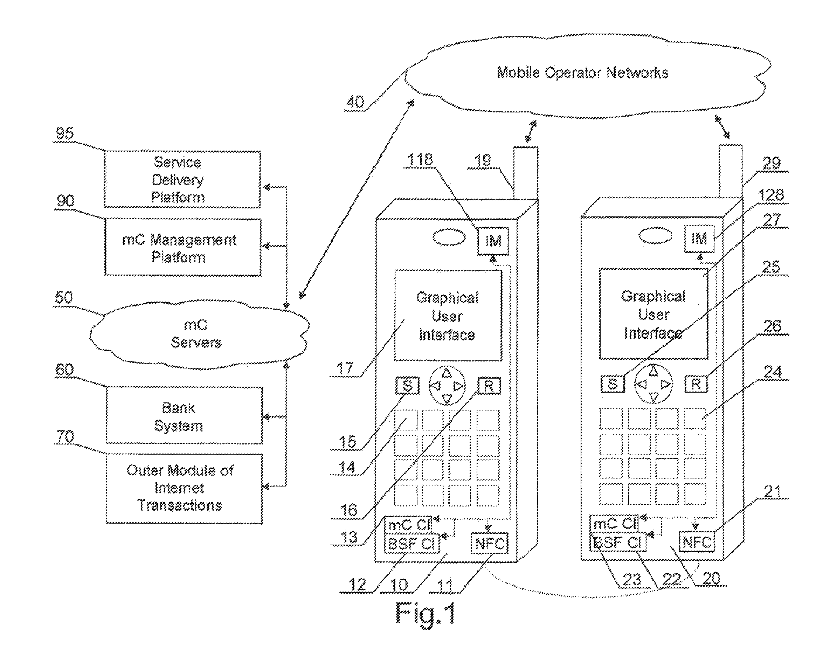

Fig. 1 presents a general embodiment of a Mobility Account System 5 according to the invention. The elements shown in Fig. 1 are to be treated as functional blocks that may be implemented by hardware or software, separately or combined together in modules. This system comprises a mobile handset 10 with integrated sender function, i.e. card and receiver function, i.e. terminal, an external device 20 which can be another mobile handset with integrated sender (i.e. card) and receiver (i.e. terminal) functions, a mobile operator network 40, using 2.5G generation mobile technology such as Enhanced-GPRS (EDGE) for GSM or CDMA2000 1x-RTT for CDMA, and the 3G generation technology such as Universal Mobile Telecommunications System (UMTS) or Evolution Data Optimized CDMA2000 (EV-DO), and the 3.5G generation technology such as High Speed Downlink Packet Access (HSDPA) / HSDPA+ or CDMA2000 EV-DO revB and future 4G technology as next generation air interface technology based upon Orthogonal Frequency-Division Multiplexing, and fixed IP-based network. The mobile operator network 40 is used for communication with the mobile handset 20 and the external mobile device as well as for sending transaction information from the mobile handset 20 and the external mobile device to a mobiCash (mC) servers 50 which is able also to communicate with a bank system 60, an interface or a module 70 with mC client 71 and Ua path 72 of internet transaction, other provisioning front-end interfaces 96, 97, 98 as well as an mC platform 90 and a service delivery platform 95 via lines 99.

In the simplest embodiment of the mobility account system, the system comprises the mobile handset 10 with integrated sender and receiver functions, the external mobile device 20 with integrated sender and receiver functions, the mobile operator network 40 through which is sent transaction request from the mobile handset 20 and the external mobile device, the mC servers 50 which is able to communicate with the bank system 60, which is also a unit of the mobility account system.

The mobile handset 10 and the external mobile device 20 of an embodiment shown in Fig. 1, from which the external mobile device 20 can have only the receiver function, are the most important units of the mobility account system. Each mobile device comprises a Mobility Account System Client (mC client) 13, 23 of mobile handset, a Mobile Network Operator Client (BSF client) 12, 22, a Near Field Communication chip (NFC chip) 11, 21, a key board 14, 24 with a Sender-key (S-key) 15, 25 and a Receiver-key (R-key) 16, 26, a graphical user interface 17, 27, an identification module 118, 128 and a transmitter/receiver circuit 19, 29 with an internal or external antenna.

The NFC chip 11, 21 is used for exchanging the mC client's identity data and transaction data between involved mC clients users, the transaction can be started when the user brings the mobile handset 10 in the proximity of the external mobile device 20 after activation of the NFC chip 11, 21 using transactions keys of the keyboard. The Near Field Communication (NFC) allows contactless payment and ticketing capabilities and access to mobile services and information with a simple touch and can use, for example Java specification requirement 257 (JSR 257) for third-party NFC applications. In the transaction process, two independent on-line processing paths of the transaction authorization initiated by the Receiver and by the Sender side are used at the same time, a unique transaction ID instead of entire bank account data, a photo/logo with embedded public name of a sender and of a receiver which is displayed on the mobile device during the transaction process as an additional ID security feature as well as a Generic Authentication Architecture (GAA) (according to 3GGP specifications) which is used in the mC authorization process of the mobile device and setup of the secured communication channel.

The keyboard 14, 24 has alphanumeric keys, by means of which the user can enter a telephone number, write a text message, write a name, etc. In alpha mode each key can be associated with a number of letters and special characters used in the text editing. Furthermore, the keyboard 14, 24 has two handling keys which are used for establishing a call or a conference call, terminating a call or rejecting an incoming call as well as a four- or five-way key which can be used for cursor movement, scrolling and selecting functions and can be placed centrally on the front surface of the phone between the graphical user interface and the alphanumeric keys.

The keyboard also has the previously mentioned additional functional keys or buttons, namely the S-key 15, 25, and the R-key 16, 26 which are used for initiating payment transactions.

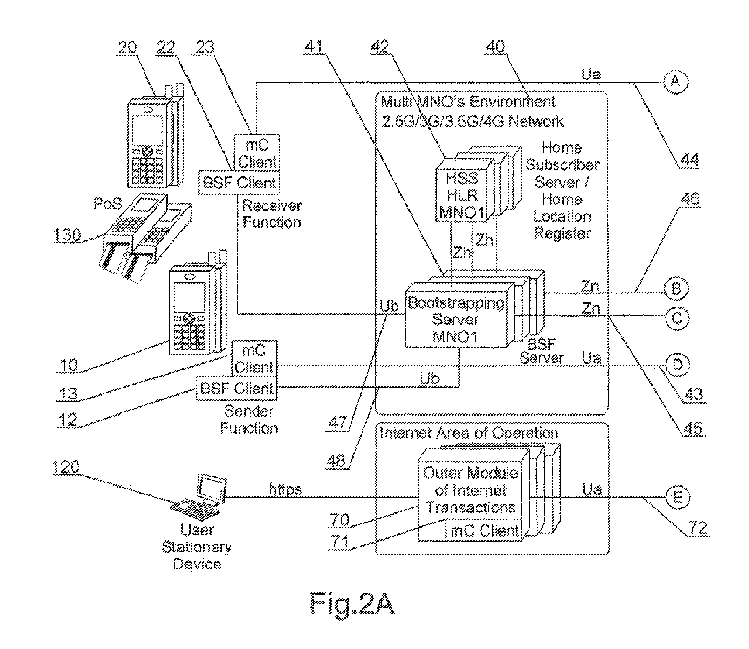

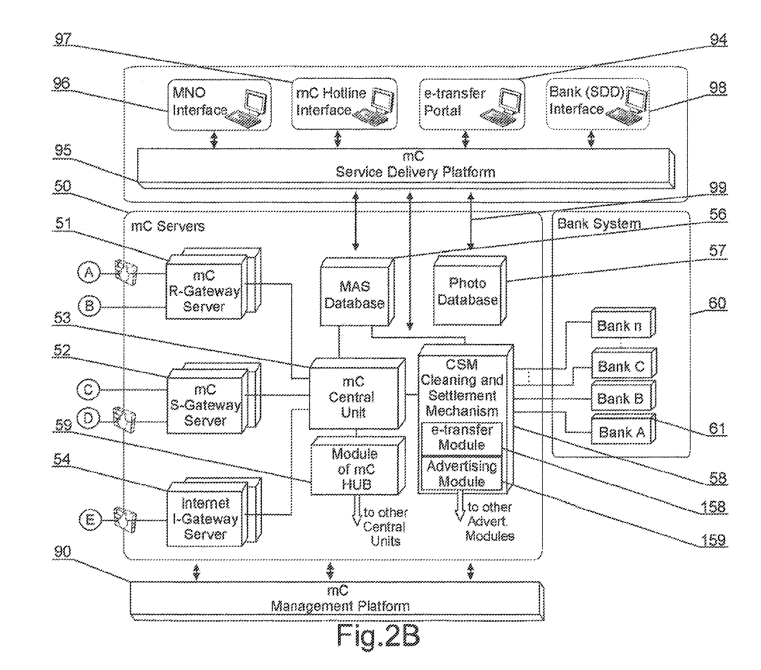

Figs. 2A and 2B show the detailed architecture of the mobility account system. The mobile handsets 10, 20 with integrated NFC chip 11, 21 and embedded mC client 13, 23, having integrated sender/receiver functions, and a PoS device 130 with integrated NFC chip and embedded mC client, having a receiver function only, are immediately ready for use without human integration (plug and play box), this means that mC client 13, 23 and BSF client 12, 22 are preinstalled. The mC client profiles could be stored on the USIM/ISIM card or generated by mC client itself from individual user data stored on the USIM/ISIM card and on-line completed during first mC client registration process that means that no sophisticated settings are necessary by the mC client but only default embedded settings which are not visible for end users. The mC client 13, 23 embedded in the phone operation system requires the use of additional functional buttons 15 and 16, 25 and 26 (similar to phone green/red buttons) which should be integrated with handset keyboard (sender/receiver buttons).

The mobility account system architecture shown in Figs. 2A and 2B has to be designed to successfully combine the operation of the mobile network environment with the financial services (e-banking) environments. To do so, the functions related to the mobile network operation and the functions related to performance of financial operation have been clearly separated. A Mobile Network Operator Client (BSF client 12, 22) is responsible for authorizing the mobile handsets 10, 20 and PoS device 130 in the mobile operator network 40 and to obtain an individual session key and an associated session ID. A Mobility Account System Client (mC client 13, 23) is responsible for performing the financial operation. The MAS application uses the mC R-Gateway or the mC S-Gateway servers 51, 52, depending on function of handled mobile handset 10, 20, to build the confidential connections 43, 44, 72 with the mC client over the mobile operator network 40 using a secured protocol such as TLS-PSK or over the internet network. The Gateways servers 51, 52 are modules of the mC servers 50, which in addition comprises an mC Central Unit 53, a Clearing and Settlement Mechanism (CSM) module 58 which communicates to servers 61 of the bank system 60 as well as the MAS Database 56 and a Photo Database 57.

The Gateways servers 51, 52, 54 perform a first point of contact within the mC environment for the mC clients embedded in the mobile devices, PoS devices and the internet transaction modules and behave as a transaction agent for collecting the transaction requests. In addition, the Gateways servers 51, 52 support security session by requesting a session key from a bootstrapping server 41 located in the mobile operator network 40, setting secured transmission channel with the mC clients for each transaction, performing communication procedure towards the mC Central Unit 53 including encryption of transaction data from the mC Central Unit 53 to the mC clients embedded in the mobile devices, PoS devices and the internet transaction modules, decryption of transaction data from the mC clients to the mC Central Unit 53, and providing a billing function for the Mobile Operator Network 40. The functions of mC Central Unit are described in the section below.

The main functions performed by the mC Central Unit 53 are: authorization of the mC clients embedded in the mobile device, in the PoS terminals and in the internet transaction modules, authorization of the financial transaction, generating transaction ID for the senders only and transaction title for the senders and the receivers, forwarding the national or international transaction request to the determined mC Central Unit (if more than one mC Central Unit is deployed), retrieving the sender/receiver data (service profile, user status) from the MAS Database 56, providing flexible Service Creation Environment for new services e.g. loyalty programs such as an individual bonus system, etc., overload handling mechanism and generating the transaction record and performance statistics for billing purposes.

The Clearing and Settlement Mechanism (CSM) module 58 is an automated clearing house or other mechanisms such as intra-bank and intra-group arrangements and bilateral or multilateral agreements between involved users. The Clearing and Settlement Mechanism module has an e-transfer module 158 being a part of CSM module with a special task of collection of all transactions performed by the MAS customers (by the receivers and by the senders) and advertising module 159 being part of the CSM module and the e-transfer module with a special task of providing an individual advertisement service. The e-transfer module 158 sends e-mail confirmation and provides on-line website interface (e-transfer portal 94) with the ability to review all performed transactions, to obtain transaction account balance, to perform seller / buyer statistic, to prepare and send individual advertisement or to change mC user individual account settings, etc. The advertising module 159 enables the receiver users, who previously performed the financial operation with sender users, to send the individual advertisements within the MAS application environment. The advertisement service consists of the advertising module which behaves as the exchange server within MAS environment and uses the e-transfer portal as user interface for composing and sending new messages. The receiver can perform statistics, for example the best buyers of last week, month, etc. and for the selected group of senders, formulate and send an individual advertisement. The senders have also possibility to block each advertisement by defining list of the unwished receiver users. Due to using an additional unique ID (Add ID) for the mC Client, instead of IMSI number of the mobile device, as a part of the transaction title, each performed transaction becomes recognizable within the MAS application environment and customer personal data, such as customer mobile number, is protected against disclosing them to the third parties. The additional 'Add ID' consists of information identifying the mC client within MAS application and name of the advertisement domain that the mC client belongs to. Having such information the messages can simply be exchanged between advertisement domains and then further individually distributed to the mC users.

Further units of the mobility account system shown in Figs. 2A and 2B are the MAS Database 56, the Photo Database 57 and the Management System module 90. The MAS database 56 is the central data storage in the distributed architecture and is composed of several replicated in-memory database servers that ensure high available data storage and fast database access. The Photo Database 57 is usable for the mC service and other Web 2.0 applications and is used for storing a photo or logo (e.g. company) of the sender and of the receiver users. The Management System (Performance, Configuration, Fault, Test, and Maintenance) module supports Fault Management, Configuration Management, Performance Management, Maintenance Management and Accounting Management for the various system entities. By the Fault Management via SNMP protocol errors on the network devices are collected and aligned, basic correlation and pre-processing of alarms is performed. The Configuration Management provides configuration of all network devices as well as logging of changes in the network. The Performance Management (PM) application monitors continuously the network performance (QoS) and resource assignments. This embraces also the Key Performance Indicators (KPIs). The Maintenance Management ensures distribution and activation of new SW loads to all network elements. The Accounting Management provides a flexible account management tool per MNO's (statistic, billing).

The Service Delivery Platform 95 used for provisioning and service activation is formed from Service Provisioner Gateways. The Service Provisioner Gateways optimize business processes by providing a fully automated or guided workflow for the mC service provisioning between involved business partners and by eliminating redundant tasks, such as inputting the same customer data into the MAS database.

In the case when the mobility account systems are deployed in a number of countries or a number of the mobile operators, the mobility account system can exchange data and information between each other using a HUB module 59, integrated with the mC Central Unit. The HUB module 59 is part of each deployed Mobility Account System and is used in the national or international transaction to exchange temporary transaction data between two transaction paths being served by two different mC Central Units (if more than one central unit is involved in the transaction completion).

A Bootstrapping Server Function (BSF) is used for physical authorization of a mobile handset 10 as well as an external mobile device 20 and an external PoS device 130 in the mobile operator network and behaves as a trusted certification authority for issuing the session keys. The BSF should be hosted in a network element, for example in a bootstrapping server 41 under the control of an MNO. BSF, HSS/HLR 42, and UEs participate in generic bootstrapping architecture (GBA) in which a shared secrets of performing AKA mechanism are established between the mobile operator network and BSF client of user equipment (UE) by running the bootstrapping procedure. The shared secrets are also used between mC Gateways and the mobile handset 10 with embedded mC client 12 as well as the external mobile device 20 with embedded mC client 22 for further authentication and security purposes of the MAS application. Access to network application functions is realized by using, for example Transport Layer Security pre-shared key protocol (TLS-PSK) which ensures the confidentiality and data integrity exchanging over communication network.

The BSF client can also be used to provide a general position of an UE in the mobile operator network. The cell ID of serving node is obtained during connection set-up between an UE and its serving network node, and then stored in a BSF client 12 associated with the mobile handset 10 as well as in a BSF client 22 associated with the external mobile device 20 or an external PoS device 130 with integrated receiver function. The MAS application uses this information for providing an additional geographical service. An operational area of each mobile handset with an integrated mC client can simple be limited to a particular area being served by the reference cell ID.

The mobility account system combines functionality of the sending and receiving of money transfers in one common mobile device, namely, in the mobile handset 10 as well as in the external mobile device 20. This functionality is designed for transferring small, medium and high amount of money within existing bank system. The MAS application generates a specific transaction title for caring out some additional transaction and customer information which is used in the transaction process for checking sender age during selling the products like cigarettes, alcohol which are allowed over 18 years old, for checking sender satisfaction index, for providing a set of additional user features supported by e-transfer module like visualization of the receiver and sender individual statistics, e.g. to perform an analysis of buyer target groups in function of the area (based on ZIP code) or in function of the sender group age, and an analysis the sender expenditures in the function of the sales category (e.g. food, clothing, computers, chemist, software, internet, financial products, etc) or in function of time, and by advertising module for providing an individual advertising service, and also for supporting the administration processes of the mobility account system (clearing house post-processing procedure). The transaction title is generated for each financial operation performed and may be added to the existing payment title record of money transfer.

The MAS application also issues the transaction ID for sender user only. The transaction ID consists of an internal transaction counter per MAS application and is used for increasing security level on the application layer, and in the transaction process to exchange transaction data between involved transaction pats if more than one central unit is involved in the transaction completion.

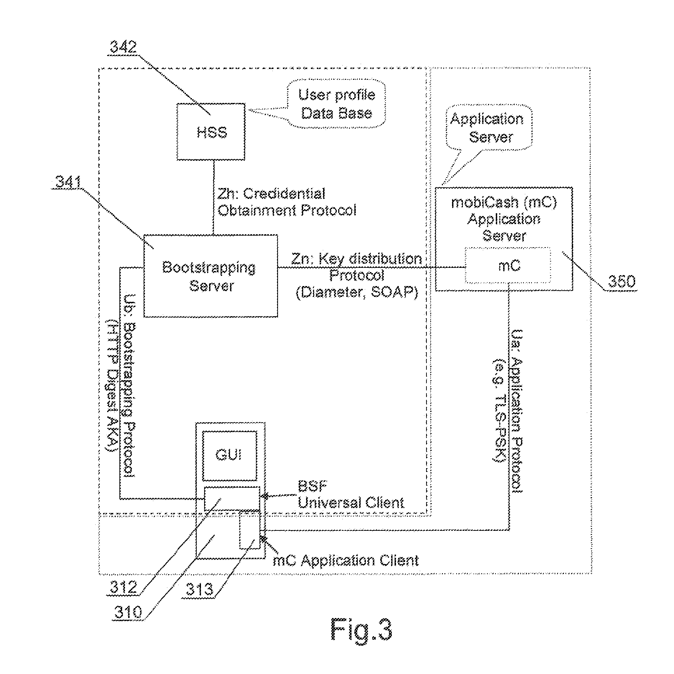

Fig. 3 shows the paths of communication signals exchanged between a mobile handset and mC application server during authentication of a mobile handset 10, an external mobile handset 20 and an external Point of Sales device.

The MAS application uses the bootstrapping procedure for the physical authorization of a cellular device and for setup of a secured communication channel between mC application client 313 and mC application server 350. The mC client 313 triggers the BSF client 312 to obtain a valid session key and an associated session ID. The BSF server checks whether last issued key materials is still valid and, if not, the AKA authorization mechanism using Ub 47, 48 and Zh path is performed. The bootstrapping server 341, the HSS module 342 and a user equipment smart card share the keys for cellular authentication. If the result is positive, a new individual session key and an associated session ID are issued by the BSF server, then provided to the BSF client using Ub path 47, 48 and finally to the mC client on the mobile user equipment. The lifetime of the key materials is set according to the local policy of the BSF server this means that the same key material may be used for multiple sessions between the MAS application and the mC Client. The mC client 313 of mobile device 310 contacts the mC server 350 to obtain a service using Ua path 43, 44 providing the associated session ID. The mC application server, using the associated session ID, requests specific session key from BSF server via Zn path 45, 46 directly. If the bootstrapping procedure is successfully performed then the mC server and client share the same specific session key which is used for setup secured transmission channel.

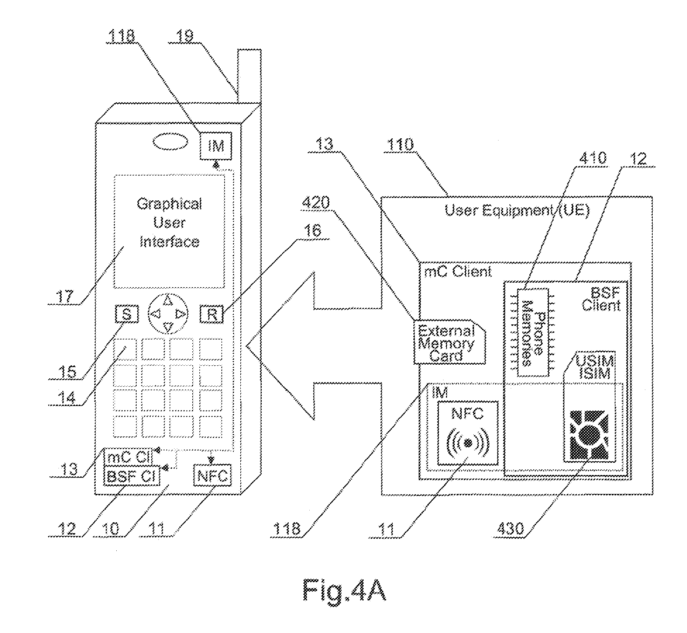

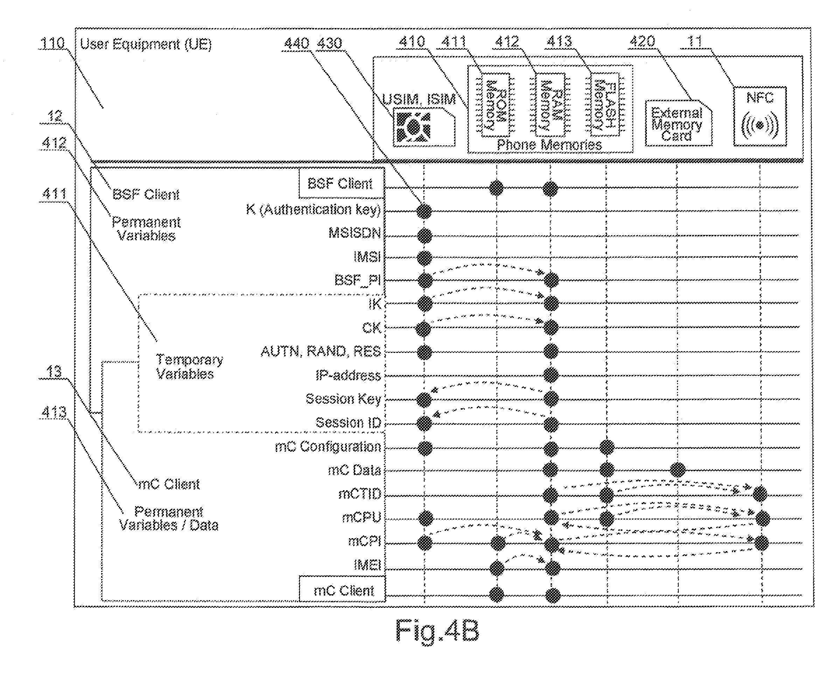

Fig. 4A shows structure of user equipment 110. In addition to early described units, the user equipment 110 has phone memories 410, an external memory card 420 and USIM/ISIM 430. In turn, Fig. 4B shows variables 440 of the BSF client and mC client stored in the user equipment 110 as well as exchanged between units of user equipment e.g. NFC 11, ROM memory 411, RAM memory 412, FLASH memory 413, the external memory card 420 and the USIM/ISIM 430. In addition, abbreviations used in Fig. 4B are explained in Table 1.

**Table 1**

| Name of Variables | Description |
|---|---|
| K (Authentication key) | It is used in the Authentication and Key Agreement (AKA) mechanism of BSF Client. |
| MSISDN | Mobile Subscriber ISDN Number is a number uniquely identifying a subscription in a GSM or UMTS mobile network. |
| | |
| | MSISDN = CC + NPA + SN |
| | CC = Country Code |
| | NPA = Number Planning Area |
| | SN = Subscriber Number |
| IMSI | International Mobile Subscriber Identity is a unique number associated with all GSM and UMTS network mobile phone users. |
| | |
| | Examples |
| | IMSI:429011234567890 |
| | |
| | MCC 429 Nepal |
| | MNC 01 Nepal Telecom |
| | MSIN 1234567890 |
| BSF_PI - | BSF_PI - Private Identity of the BSF Client being used in the boostrapping procedure |
| IK | IK: An integrity key, CK: A |
| CK | cipher key, AUTN: An authentication token, |
| AUTN, RAND, RES | RAND: A random number, |
| | XRES: An expected response, |
| | are used in the Authentication and Key Agreement (AKA) mechanism of BSF Client |
| IP-address | IP-address of a current session |
| Session key | Session key is a unique session parameter used for performing encryption and decryption process of secured communication channel. |
| Session ID | The session ID is issued for securely sharing a session key between involved session parties (the mC client of mobile device and the gateway of the MAS application server). |
| mC Configuration | The mC Client configuration data, for example: fault bank account being used with the mC client, |
| | - settings of other bank accounts being possible used with the mC Client, |
| | - daily, weekly, monthly budget limit settings, |
| | - the rules of an archiving function for performed transactions |
| | - additional text used for payment title e.g. 'ALDI says Thank You' |
| | - age tag limit used by receiver function, |
| | - entry PIN of the mC client, |
| | - time of an automatic deactivation if the mC Client is not used, |
| | - activation flag of a geographical service |
| | - selection of the reference cell ID |
| mC Data | storage of the performed transactions of sender and receiver function, e.g. for visualization of the receiver and the sender individual statistics such as |
| | - buyer target group in function of the area (based on ZIP code) |
| | - buyer target group in function of the group age |
| | - sender expenditures in function of the sales category |
| | (e.g. food, clothing, computers, chemist, software, internet, financial products, etc) or period of time |
| mCTID | mC Transaction ID - it is a unique transaction ID for sender user only, consisting of an internal transaction counter per MAS application. |
| mCPU | mC Client Public Identity |
| | (e.g. Jan Schmidt as Sender |
| | e.g. ALDI_Munich as Receiver) |
| mCPI | mC Client Private Identity |
| | e.g. IMSI+IMEI |
| IMEI | The International Mobile Equipment Identity is a number unique to every GSM and WCDMA mobile phone. |
| USIM / ISIM | Universal Subscriber Identity Module / IP Multimedia Services Identity Module |

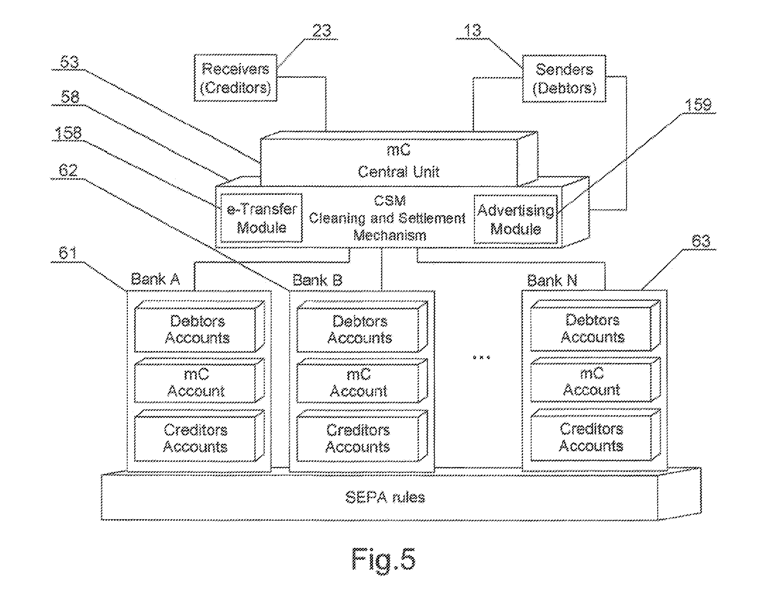

Fig. 5 shows a structure of a banks system and links and connections between the bank system and senders 13 or debtors and receivers 23 or creditors using the mC Central Unit 53 and Cleaning and Settlement Mechanism (CSM) 58. As shown in Fig. 5, the banks system comprises, for example Bank A 61, Bank B 62, Bank N 63, each servicing debtors accounts, an mC account and creditors accounts. The CSM module executes the operations of money transfers within existing bank system 61 if the transaction request is successfully authorized by the MAS application. The CSM performs the operations vertically as an internal money transfer within the same bank (bank A 61, bank B 62, bank N 63, etc.).

Each debtor user (sender), as basis prerequisite of the bank system, must authorize the temporary creditor (MAS) for debiting his bank account. The authorization is reached by giving the signed mandate to the temporary creditor (MAS). To simplify this process the temporary creditor may offer the debtor (sender) the possibility to complete the mandate by using an automated process, including the provision of an electronic signature. The mandate-related data is immediately transmitted by the temporary creditor bank to the debtor bank in electronic form as part of the collection in one single flow using the CSM module, which in the case of the MAS application is the same bank, for example Bank A 61.

In the transaction execution process the Mobility Account System performs the transaction authorizations of the involved parties (a sender and a receiver) according to one of the transaction variant described in the next section.

The CSM module checks status of debtor user (sender), namely any defined and remained limit and the validity of debtor mandate and if positive approves the transaction. The CSM module collects all performed transactions and sends the collections to the bank (A, B, ... N) serving the debtor's accounts accordingly. The bank of debtor is obliged, before debiting the debtor's account (sender), to check again, for each Collection presented by the Creditor Bank, the correlation between the Mandate related data part of the Collection and the stored Mandate data received as part of the confirmation by the Debtor (sender). If execution of the collection procedure is positive then the bank performs a money transfer from a debtor (sender) to a temporary creditor (MAS) account as an internal transfer within the same bank, for example Bank A 61. At the same time the CSM module requests a money transfer from a temporary creditor (MAS) to a final creditor account (receiver) as an internal transaction performed within the same Bank, for example Bank B 62, then the transaction is completed.

Cyclically, the CSM module performs the balancing procedure between the temporary creditor's accounts of the MAS application located in the different banks (A 61, B 62, ... N 63).

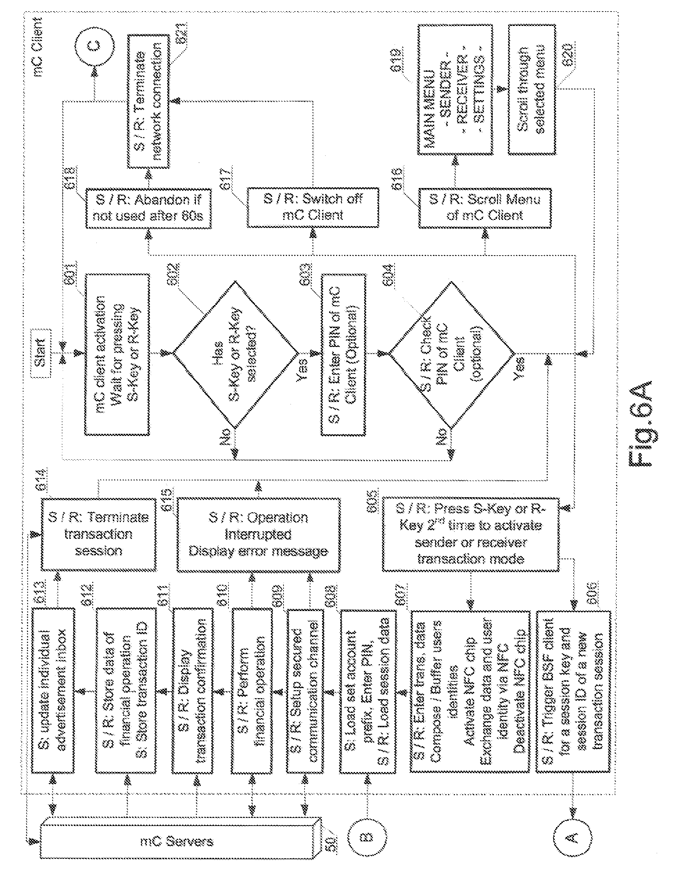

Fig. 6A shows a structure of a Mobility Account System Client (mC client) flow chart for performing a financial operation used in both transaction variants proposed. The mC client 13, 23 is a universal client, preferably embedded in the telephone operation system, supporting sender and receiver functions of the MAS application. The sender function (by analogy to card) is used to accept a money transfer from a sender to a receiver bank account. The receiver function (by analogy to terminal) is used to request a money transfer from a sender to a receiver bank account. The mC client behaves as a remote financial agent collecting the transaction requests for the Mobility Account System application.

In order to keep a clear separation of the financial and communication worlds the proposed functionalities of the mC Client and the BSF Client are deliberately separated, there are not any technical obstacles to confront them in the common MAS client.

The Mobility Account System Client (mC Client) is designed to communicate with the Mobility Account System application in order to perform the financial operation and with the Mobile Network Operator Client (BSF client) in order to obtain a session key and an associated session ID necessary to setup the secured communication channel with the MAS application.

Each mC Client embedded in the mobile device has two individual parameters, the mC Public Identity (mC_PU) and the mC Private Identity (mC_PI), which identify the mC client within the MAS application environment. The both parameters together with transaction data, namely the transaction ID (mC_TID) of sender user, transaction amount and an additional payment title of receiver, are exchanged through NFC between involved parties during initiation of the transaction process. The mC Public Identity of sender and of receiver is immediately disclosed to the involved users (e.g. 'Jan Schmidt' as sender and 'Real Store 251' as receiver) while the mC Private Identity is only used for an internal communication between the mC clients on the mobile device and the MAS application in the network (mC_PI of the sender in the sender transaction path, mC_PI of the receiver in the receiver transaction path). The mC Private Identity is composed by taking IMSI parameter stored on the user individual USIM/ISIM card and by taking IMEI number of the mobile device.

The mC client is activated when user presses one of the functional buttons: S-Key (for sender function) and R-Key (for receiver function) in steps 601, 602. Optionally, when the PIN function of mC client is activated, user has to enter the defined PIN number of the mC client in steps 603, 604 and then the mC client is opened and ready for further operation. On this level of the mC client menu, user may scroll detailed menu in step 616, or the mC client may be abandoned in step 617 or automatically abandoned if not used in step 618 or the financial operation may be initiated by pressing S-Key or R-Key a second time, for full activation the sender or the receiver transaction mode in step 605. Further, if the financial operation is selected, two steps are performed in parallel, in step 606 the BSF client is triggered for requesting the session key and the associated session ID for new transaction session, and in step 607 the financial operation is prepared and initiated. This process consists of the entering transaction data by using a phone key-board, loading transaction ID of sender user and an additional text of payment title of the receiver user, composing and buffering the public and the private identity data of the mC clients, activating the NFC chip in order to exchange transaction data and mC client identity data between the sender and the receiver mobile device and ending with deactivating of the NFC chip. The mC client can support the multi bank accounts environment, which means that more than one account may be configured by the mC client but only one account can be selected and used in the transaction process. The preferably account selection being connected with the mC client is done in the steps 619, 620. As basis prerequisite of the bank system for each additional account is that the user with the sender function must authorize the MAS application as a temporary creditor for debiting each of his additional bank account. In step 608 the BSF client returns a valid session key and an associated session ID of new transaction session and an actual session data, and then the sender transaction authorization PIN is entered and a sender prefix of the selected bank account and an actual session data, namely a serving cell ID of the network node and a session IP address of the receiver and of the sender are loaded for further transaction proceeding. In step 609 the request of setup secured communication session channel is sent to the mC servers 50 or, in the case when the BSF client failed with providing the key materials, further performance of the financial transaction is stopped and an error message is displayed accordingly in step 615. The user can try again to activate the sender or the receiver function starting with step 605 or close the mC client in step 617.

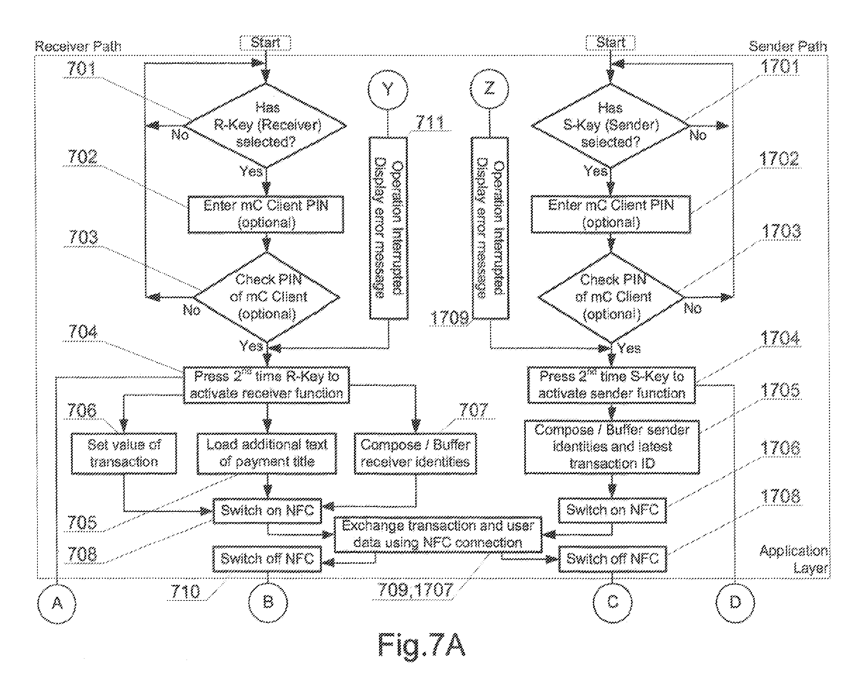

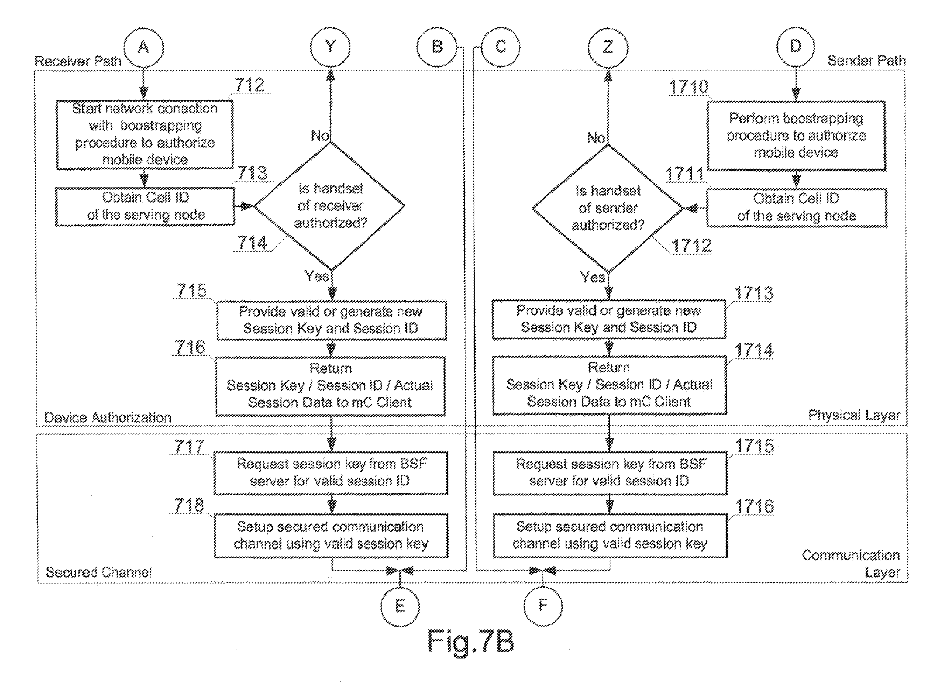

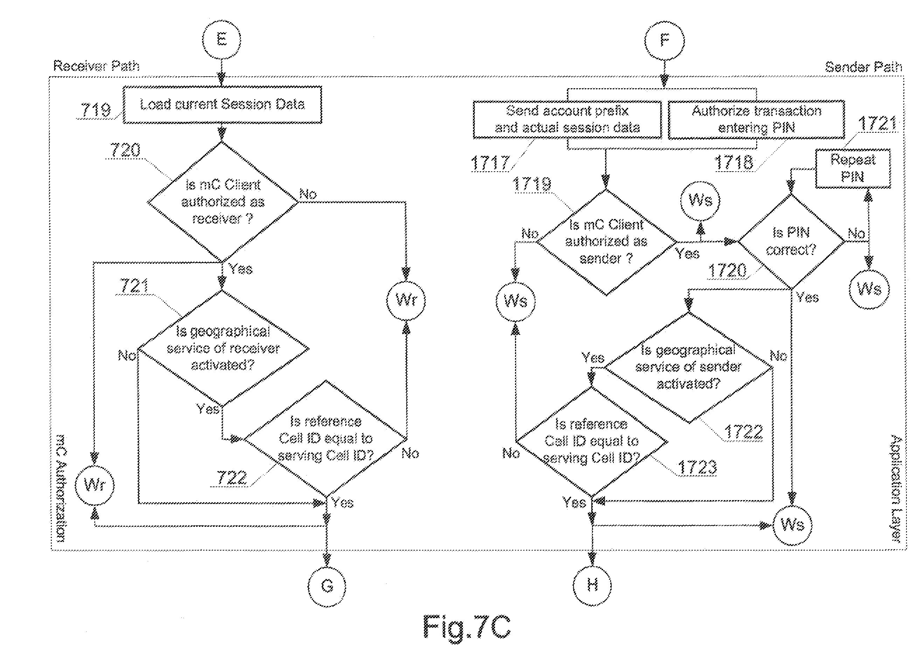

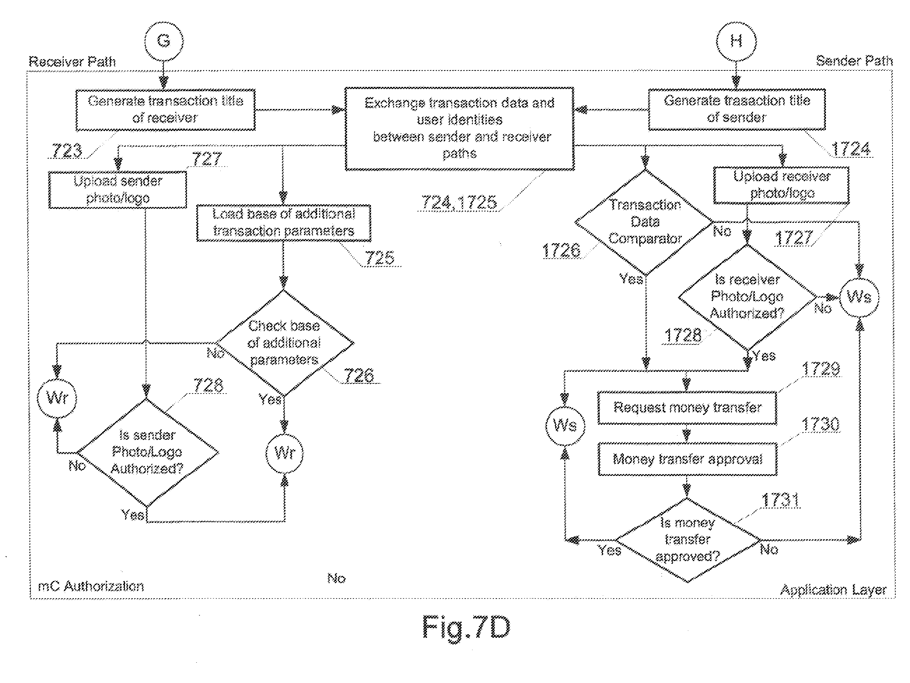

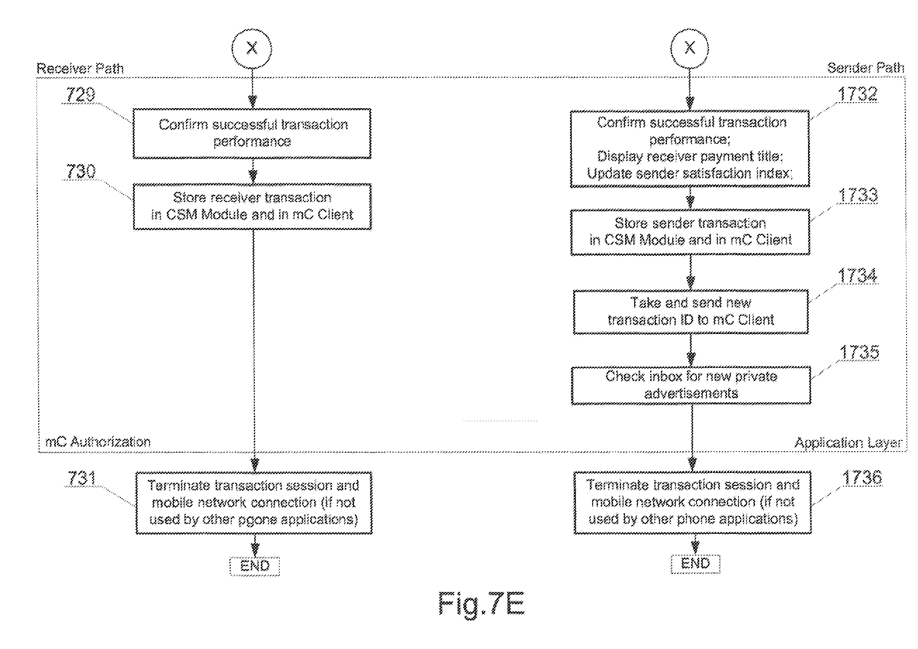

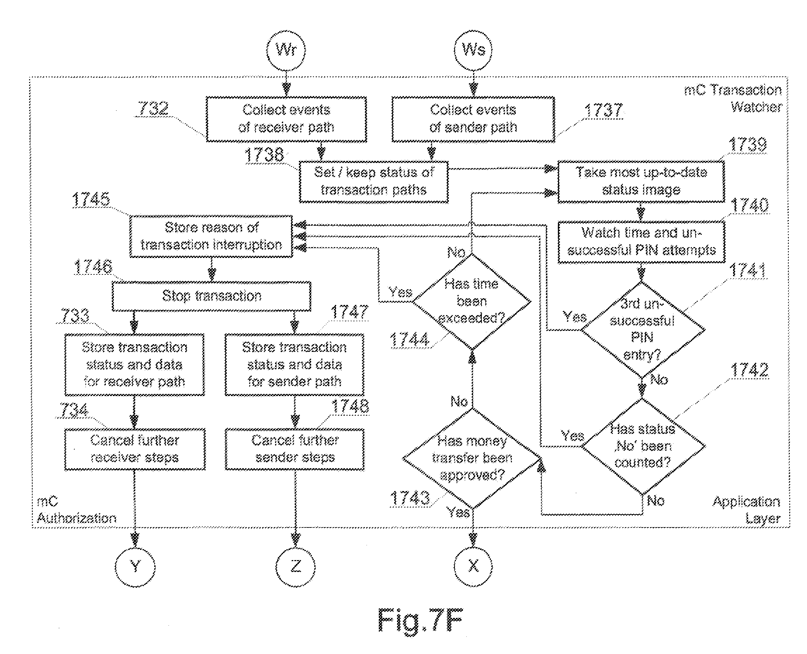

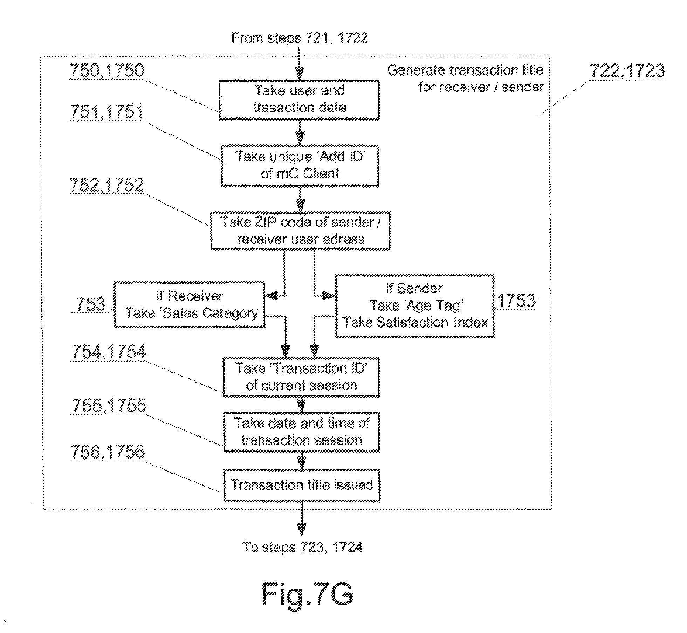

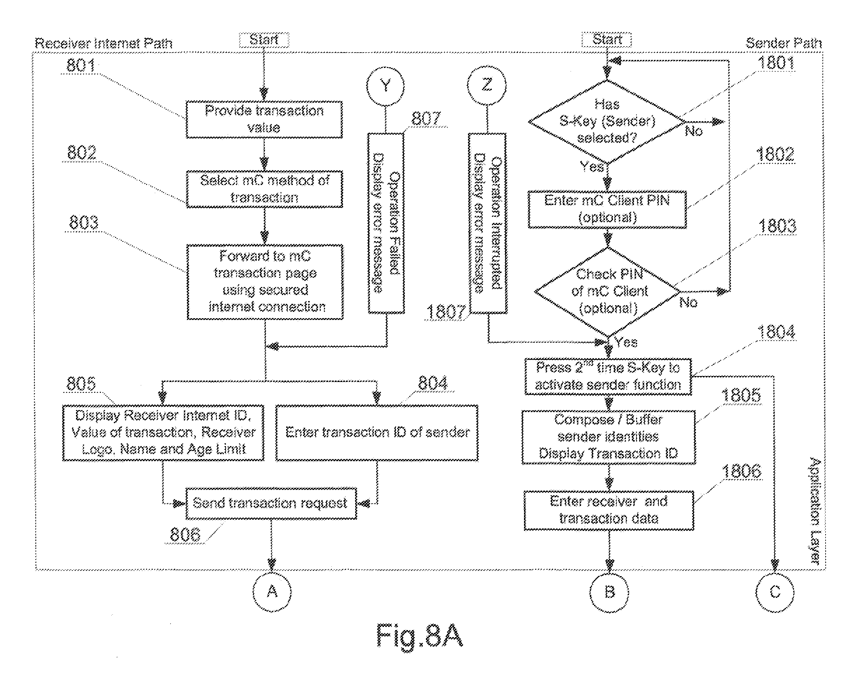

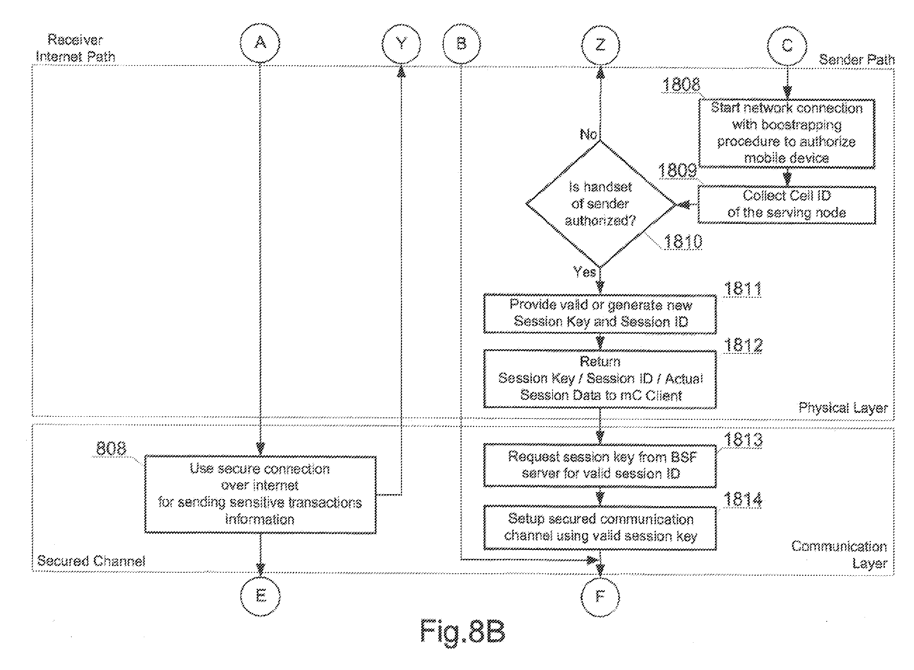

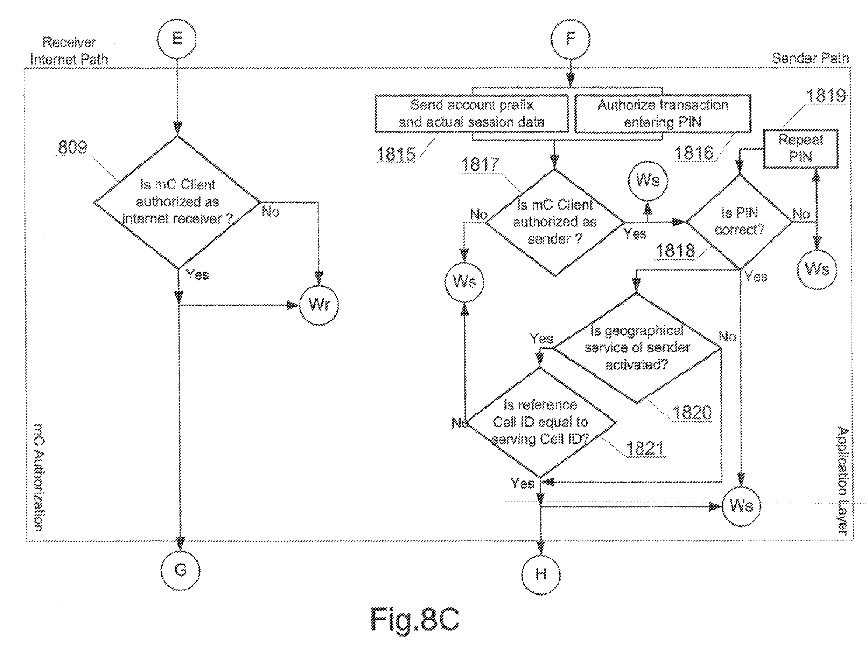

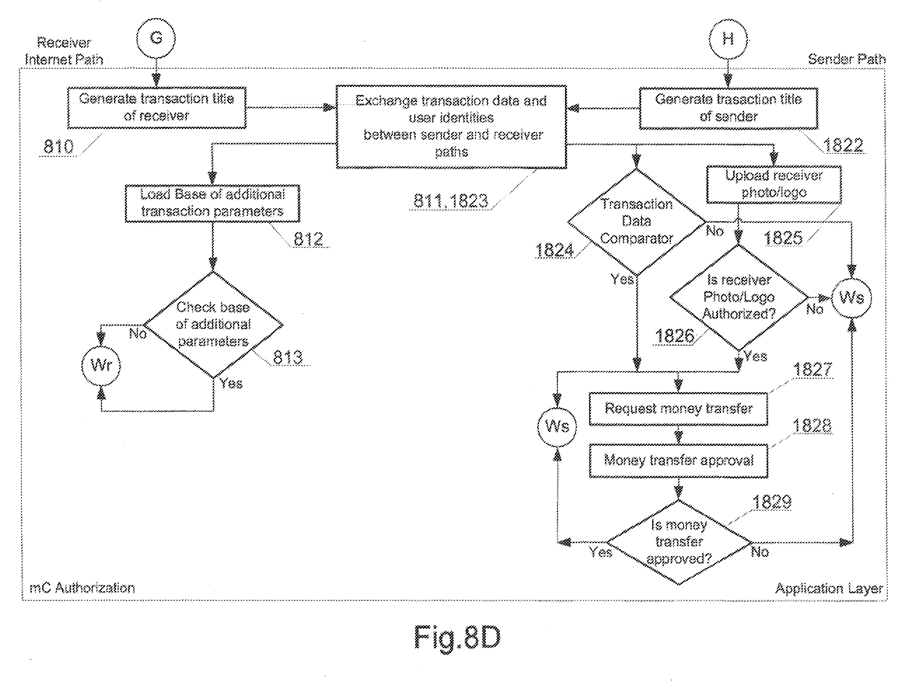

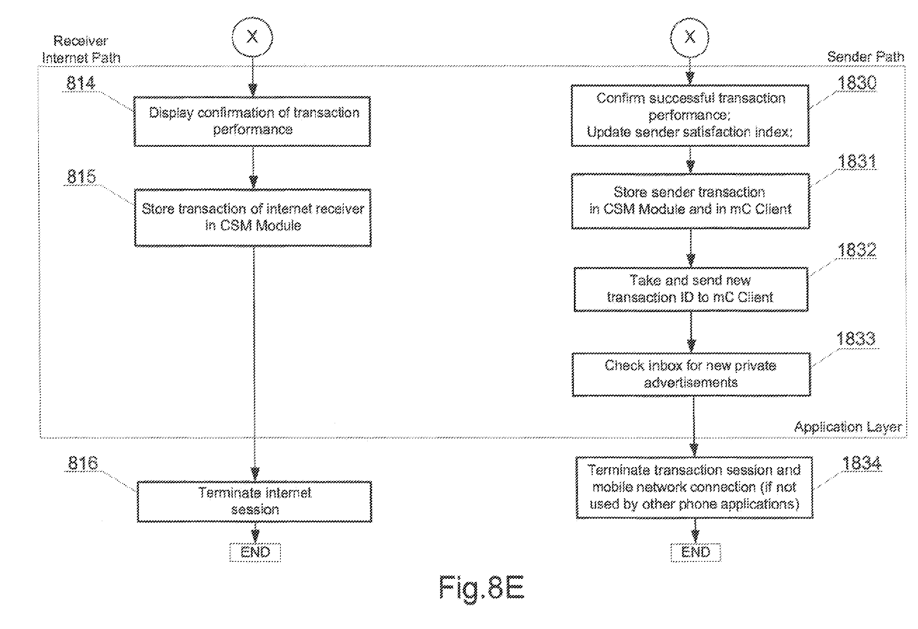

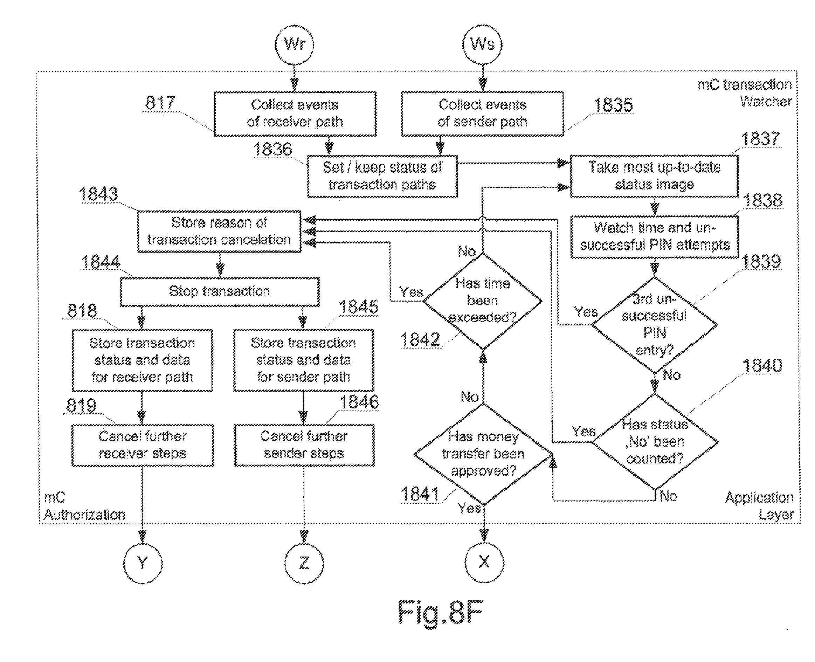

The financial operation is performed in step 610 and then confirmation of successful transaction completion is displayed in step 611. For more details of the step 610 please refer to the flow chart of a first variant of a handset-to-handset or handset-to-Point of Sales device procedure in Figs. 7A, 7B, 7C, 7D, 7E, 7F and 7G or the flow chart of a second variant of a handset-to-an external stationary device procedure in Figs. 8A, 8B, 8C, 8D, 8E and 8F. If the performance of financial operation fails then error message is displayed accordingly in step 615. In step 612 new transaction ID (provided for sender only) and data of last performed financial operation are stored by the mC client embedded in the mobile device. In step 613 an individual advertisement inbox of the sender is updated. The mC client terminates the transaction session with MAS application in step 614 and then either new financial operation can be started in step 605 or user can scroll menu of the mC client in step 616 or the mC client can be closed in step 617, and then the request of network connection termination is sent to the BSF client in step 621.

The main menu of the mC client (step 619) consists of three positions: SENDER, RECEIVER and SETTINGS. The user of mC client can scroll through selected menu in step 620.

The sender menu includes the following sub-menus: 1) Last transactions: to review monthly, weekly, daily performed transactions, to check an account balance; 2) Statistics: for visualization of the sender individual statistics, for example an analysis the sender expenditures in the function of the sales category (e.g. food, clothing, computers, chemist, software, internet, financial products, etc.) or in the function of time; 3) Sender settings: to set a budget limit, to set the rules of an archiving function of the performed transactions, e.g. each month, week, etc., to select preferably bank account being used with the mC client and to configure new bank accounts to be possibly used, to active the geographical service and to defining the reference cell ID; 4) Advertising Inbox: to manage the personal advertising messages from the receivers who previously performed financial transactions with the senders and are allowed to send them advertising messages.

The receiver menu consists of the following sub-menus: 1) Last transactions: to review monthly, weekly, daily performed transactions, to check a total account balance, etc.; 2) Statistics: for visualization of the receiver individual statistics, for example an analysis the buyer target groups in function of the area (based on ZIP code) or in function of the buyer groups age; 3) Receiver settings: to set base of additional transaction parameters including activation of an age limit service, definition of a limit of age tag (e.g. it could be used by the cigarette selling machine) and definition of acceptable level of the sender satisfaction index, to define an additional text of payment title (e.g. 'ALDI says thank you'), to set the rules of the archiving function of the performed transactions, e.g. monthly, weekly, etc.; to active the geographical service and to define the reference cell ID of the serving network node.

The settings menu of the mC Client consists of the following sub-menus: 1) to entry/change password of the mC client; 2) to set time of an automatic deactivation if the mC Client is not used.

The geographical service and the age limit service belong to the network services of the MAS application. Any changes of service status, like activation/deactivation of the geographical service, definition/redefinition of the reference cell ID of the serving network node, activation/deactivation of the age limit check service and definition/redefinition limit of an age tag and acceptable level of the sender satisfaction index, are treated as update of the mC Client service profile which has to be immediately reflected in the mC client profile stored centrally by the MAS application. New settings of the mC clients (if any new done) are sent to the MAS application in the separated special session. The MAS application performs update of the mC client service profile in the MAS database and afterwards new settings become immediately applicable for next initiated receiver and sender transaction session. The settings of mC client user are also adjustable using e-transfer portal interface which is preferred method for the internet receiver account.

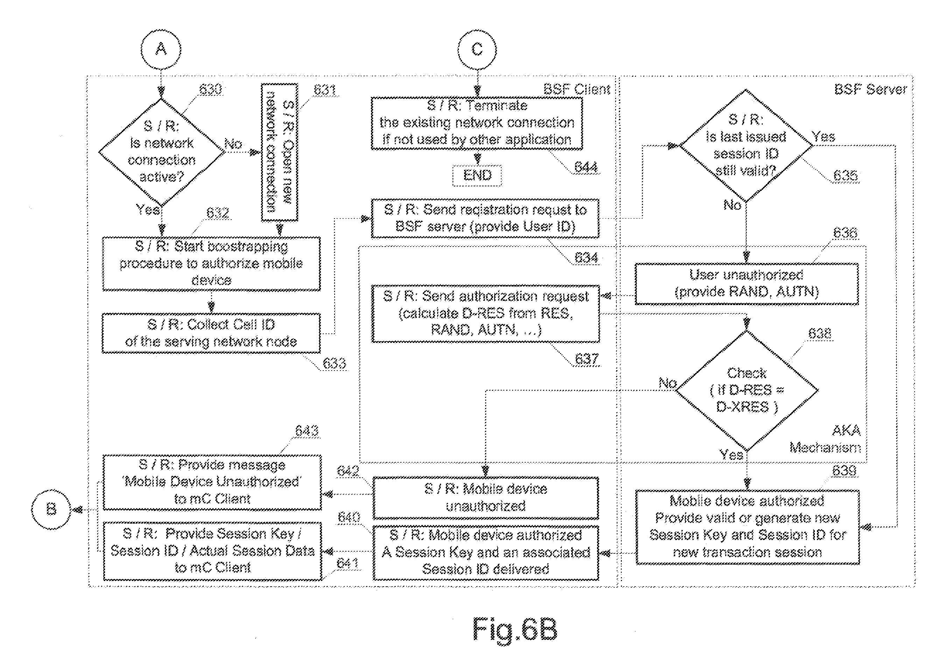

Fig. 6B shows a structure of the Mobile Network Operator Client (BSF client) flow chart for performing a financial operation used in both transaction variants described. In order to keep a clear separation of the financial and communication worlds the proposed functionalities of the mC Client and the BSF Client are deliberately separated, there are not any technical obstacles to confront them in the common MAS client.

The Mobile Network Operator Client (BSF Client) is designed to communicate with the Bootstrapping Server 41 in order to authorize the mobile device in the mobile operator network 40 and to obtain a session key and an associated session ID and with the Mobility Account System Client (mC client) in order to distribute the session key and the associated session ID which is necessary to setup the secured communication channel between the mC Client and the MAS application.

In step 630 the BSF client checks for running 2.5G/3G/3.5G/4G network connection and if no one is detected, then new mobile network connection is initiated in step 631. The generic bootstrapping procedure for the device authentication and the key agreement is started in step 632. In step 633 the cell of serving network node is obtained and stored by the BSF client.

The BSF client sends the registration request towards the BSF server located in the mobile operator network in step 634. In step 635 the BSF server checks whether last issued a session key and an associated session ID are still valid for the requested BSF client and can still be used for new transaction session. If yes, the existing key materials are returned in step 639, if not, the AKA mechanism is performed between the BSF client of mobile device and the BSF server of network operator node in steps 636-638. The lifetime of the key materials is set according to the local policy of the BSF server this means that the same key material may be used for multiple sessions between the MAS application and the mC Client. If the AKA authorization is successful performed, then the BSF acts as a trusted certification authority and issues new session key and associated session ID in step 639. In step 640 the key materials are delivered to the BSF client on the mobile device and internally together with an actual session data, namely the serving cell ID and the session IP address provided to mC Client in step 641. If the AKA authorization is not performed successfully, instead of the key materials, an error message is provided to the BSF client in step 642 and then internally distributed to the mC Client in step 643. In step 644 the existing mobile network connection is terminated on the mC Client request if it is not currently used by other phone applications.

The transaction variants introduced in the section below consist of three layers processing steps. In the physical layer an authorization of the mobile device in the mobile operator network is performed, a session key and an associated session ID are delivered. In the transmission layer a secured transmission channel is set up between involved transaction parties and finally, in the application layer a financial operation is completed.

Each financial operation is performed in two parallel transaction paths, namely receiver path and sender path. Each path authorizes its mobile device in the serving network operator network, then authorizes its mC client in the serving MAS application, performs its financial operation request and finally sends the confirmation of the successful transaction completion. Such confirmation may be treated as an electronic bill (printable if necessary) replacing needs of the traditional bills of sales.

Figs. 7A, 7B, 7C, 7D, 7E, 7F and 7G show a flow chart of a first variant of handset-to-handset or handset-to-point of sales device procedure.

A preparation and initiation of the financial operation is done in the steps 701-710, 1701-1708. The mC client is activated after pressing the functional buttons: S-Key (for sender function) and R-Key (for receiver function) in steps 701, 1701. Optionally, when the PIN service of the mC client is activated, user has to enter a valid PIN of the mC client in steps 702, 1702 and then, if the verification is positive in steps 703, 1703, the mC client is opened. The financial operation is initiated by pressing S-Key or R-Key a second time in steps 704 and 1704. This process consists of entering transaction data by using a phone key-board in step 706 of receiver path, loading the receiver additional text of payment title in step 705, composing and buffering the mC client private and public identity data in step 707 of the receiver path and in step 1705 of the sender path where additionally the loading the sender transaction ID is performed, activating the NFC chip (steps 708, 1706) in order to exchange transaction data and user identity data between the sender and the receiver mobile devices in steps 709, 1707 and ending with deactivating of the NFC chip in steps 710, 1708. The mC client can support the multi bank accounts environment which means that more than one account may be configured by the mC client but only one account can be selected and used in the transaction process. The selection of preferably account being connected with the mC client is briefly described in Fig.6A. In step 1717 a prefix of the selected bank account and an actual sender session data, namely the serving cell ID and the session IP address are loaded and then provided to the MAS application. In step 1718 the transaction PIN of sender is entered for further authorization of the financial operation. In step 719 an actual session data of the receiver, namely, the serving cell ID and the session IP address, are loaded for further transaction proceeding

In parallel to the steps 705-710, 1705-1708 the network connection with bootstrapping procedure is started in steps 712 and 1710. The cell ID of the serving mobile network node is obtained in steps 713, 1711 and then authorization of the mobile device into the mobile operator network is performed in steps 714, 1712. If this authorization is successfully achieved, a new session key and an associated session ID are issued or last valid session key and the associated session ID are provided in steps 715, 1713 and returned to the mC clients including an actual session data, namely the serving cell ID and the session IP address in steps 716, 1714, then the process of mobile device authorization into the mobile operator network is completed. For more details of the steps 712-716 and 1710- 1714 please refer to the flow chart of a Mobile Network Operator Client (BSF client) in Fig. 6B. If the authorization is not performed successfully, instead of the key materials, an error message is displayed using GUI of the mobile device in step 711 or 1709.

The session key is a unique session parameter that determines the functional output of a cryptographic mechanism used for performing encryption and decryption process of secured communication channel. Without a session key the mechanism used for providing secured communication channel would have no result. The unique session parameter consists of a set of characters in either ASCII or Hexadecimal (Hex) format. A key length is usually measured in bits (typically 64bits, 128bits or 256 bits) and depends on a cryptographic mechanism used and level of security needed. Additionally an associated session ID is issued in parallel for securely sharing a session key between involved session parties, namely the mC client of mobile device and the gateway of MAS application servers, which is performed in steps 717, 1715. An individual session key and an associated session ID are used in each opened transaction session.

The network connection, which is set up between two involved parties and share the same session key, is called secured communication channel. The 'Setup secured communication channel using valid session key' in steps 718 and 1716 means that both session parties involved share the same session key for performing encryption and decryption process of secured communication channel. The information stream is confidentially exchanged between involved session's parties ensuring that an individual transaction data being in transit is not disclosed to unauthorized individuals, entities, or processes. The procedures of mobile device authorization and setup communication channel are depicted in Fig. 3.

After successful completion of device authorization in the steps 712-716, 1710-1714 and setup of communication channel in the steps 717-718, 1715-1716, the mC clients identity data, the account settings and an individual transaction data are sent via two parallel transaction paths to the central unit. In steps 720, 1719 the mC clients involved in the transaction are authorized by the MAS application. The mC client settings, bank account data and public identity for corresponding private identity of receiver being part of the receiver path process and the mC client settings, preferably bank account data, last stored transaction ID and public identity for corresponding private identity of sender being part of the sender path process are downloaded from the MAS database to the operational memory of central unit and stored there until transaction completion. The public identity of the sender mC client and the sender transaction ID are proofed accordingly whether they are equaled to the mC client profile and transaction ID of the sender stored in the MAS application. The same comparison process is performed accordingly for the receiver path. In step 1720 the PIN number is authorized. The sender user has 3 attempts (step 1721) to provide a correct PIN number otherwise the financial operation is interrupted. In step 721 and 1722 as part of the mC client authorization process, status of the geographical service is checked whether it is activated. The cell ID of the serving network node, which is obtained by BSF client, reported via mC client to the mC central unit, is compared with the reference cell ID stored in the MAS database in steps 722, 1723. If those two values are equal, namely the serving cell ID with the reference cell or cells ID, the transaction process is continued. If this authorization is not successful an error message is displayed by the mobile device in step 711 or 1709 and further transaction process is terminated.

In steps 723, 1724 the transaction title of the receiver and the sender user is generated. The transaction title has a special structure which is depicted in the Fig. 7G and shows details of step 723, 1724, namely generation of transaction title procedure, which starts by taking the mC client user data and transaction data in steps 750, 1750, then runs by taking an additional unique ID (Add ID) of the mC client involved in the transaction in steps 751,1751, ZIP code either of the sender or of the receiver user address in steps 752,1752, and then it is continued by adding either an age tag and latest satisfaction index of the sender user 1753 or the sales category of the receiver user 753, the transaction ID of current financial operation in steps 754,1754, a current date and time of transaction performance in steps 755, 1755 and ends at setting mC transaction title in steps 756, 1756.

The transaction title includes specific information used in the transaction process for checking sender age, e.g. for selling the cigarettes which is allowed above 18 years, and for providing set of additional post-transaction features like visualization of the receiver and the sender individual buyer/seller statistics, like supporting the administration processes of the mobility account system (clearing house post-processing procedures), or for providing individual advertising service. The age tag is generated for assigning a sender mC client user to the one of the defined age groups within the MAS application environment. This assignment is done based on the sender date of birth stored in the MAS database. The sender satisfaction index is an important part of a sender profile which helps the receivers to evaluate the sender's reputation as a reliable transaction partner. A sender satisfaction index is generated by the CSM module for each sender transaction performed. The given satisfaction feedback is statistically counted and assigned to the sender continuously updating his profile. In the case when the sender has not sufficient financing in his bank account for covering necessary transaction expenses, then a negative satisfaction feedback is issued which automatically decreases sender's reputation index as reliable transaction partner. The receiver can define an acceptable level of the sender satisfaction index and as long as the index is equaled or above acceptable level defined by receiver, the transaction is continued, but if the sender satisfaction index becomes lower than defined level by the receiver, then the transaction requested from such sender is refused. The age tag and sender satisfaction index belong to the base of additional transaction parameters and are further proofed in step 726 of receiver path.

The transaction title being part of the sender and the receiver transaction path is generated for each transaction performed. Information included into the transaction title may be treated as part of the existing payment title record of the money transfer. Such composed payment title (including new transaction title and the existing payment title record) is further used by the e-transfer module and an advertising module being the integrated modules of the MAS solution for providing the customer additional statistics and individual advertising services.

The individual transaction data, namely amount, sender and receiver transaction title, transaction ID of sender, additional payment title of receiver, and user identity data, namely private and public identities of the sender and of the receiver, received from two independent sources (via sender and receiver parallel transaction paths), downloaded from the MAS database and generated during transaction process are exchanged between the sender path and the receiver path in steps 724, 1725, and then compared in step 1726 of sender path. The bank account data of the receiver is also exchanged in step 724, 1725. In step 725 the base settings of additional transaction parameters are loaded and checked in step 726. It consists of checking a sender age limit and a sender satisfaction index. When status of the age limit service is activated then the defined age limit of receiver service is compared with the age tag of sender and when status of checking the sender satisfaction index is requested then the sender acceptable satisfaction index defined by receiver is compared with the current sender satisfaction index. If both comparisons are positive the transaction is continued. In parallel the photo / logo with embedded text containing public identity of sender or receiver user is uploaded to the mobile device in step 727, 1727 and accordingly confirmed by receiver and sender in steps 728, 1728. The photo / logo of the mC user may also be stored locally on the mobile devices and optionally exchanged via NFC during transaction initiation between involved parties and then automatically compared by the mC client with the user photo/logo uploaded from the network. If two photos / logos are identical, the transaction process is further continued without additional user intervention.

If a result of all perform authorizations and comparisons is positive, namely, (1) authorization of the mC Client as receiver, (2) authorization of the mC Client as sender, (3) the transaction PIN authorization of the sender, (4) proofing the reference cell ID of the geographical service of receiver if activated by receiver, (5) proofing the reference cell ID of the geographical service of sender if activated by sender, (6) comparison of transaction data and user data received via sender path, and downloaded from the MAS database of the sender path with the transaction data and user data received via receiver path and downloaded from the MAS database of the receiver path (7) the authorization of sender photo/logo with embedded text containing sender public identity confirmed by receiver, (8) authorization of the receiver photo/logo with embedded text containing receiver public identity confirmed by sender, (9) authorization of the additional transaction parameters requested by receiver, the money transfer request from sender to receiver bank account is submitted to the CSM module in step 1729. The CSM module checks status of sender user, namely daily, weekly, monthly defined and remained limit and a validity of sender mandate under SEPA and then, if it is positive, requests money transfer using SEPA model. The method of CSM module interworking with the banks is depicted in Fig. 5. The CSM module confirms to the central unit approval of a money transfer in step 1730.

The sender path has a transaction lead and performs the mC transaction main watcher process. The transaction watcher procedure, which is depicted in the Fig. 7F, collects information about transaction events of both involved transaction paths starting from steps 720, 1719 which is the event of both mC clients authorization until step 1730 which is the event of money transfer approval. Each new transaction event of the involved parties is collected in step 732 of receiver and step 1737 of sender and then combined together in step 1738. In step 1739 most up-to-dated image of the transaction status is constantly taken and confirmed in step 1740 until either the 3rd unsuccessful attempt of providing the correct authorization PIN has been detected in step 1741, or any negative (NO) event status, excluding step 1720, has been recognized in step 1742, or approval of the money transfer request has been detected in step 1743, or the transaction time has been exceeded in step 1744. When either step 1741 or step 1742 or step 1744 has reached status 'yes', the reason of this interruption is proofed and stored in step 1745 and then the financial operation is stopped in step 1746. Each transaction path stores the latest transaction status and data in step 733, 1747, cancels the remaining transaction steps 734, 1748 and informs the users displaying error message on the mobile device in step 711, 1709. When step 1743 has obtained status 'yes', then the confirmation of successful transaction completion is sent to the involved parties (both sender and receiver) and displayed accordingly in steps 729, 1732. Additionally the receiver payment title is displayed by the sender mobile device and the sender satisfaction index is automatically updated in step 1732. The e-transfer module and the mC Client on the mobile device collect and then store data of the performed financial operation in steps 730, 1733. The transaction records are immediately available on-line on the internet e-transaction portal and can be reviewed locally by the mC client on the mobile device. Such records may also be used as an electronic bill (printable if necessary) replacing the needs of the traditional paper bills of sales. The new transaction ID for next incoming transaction is taken and provided per sender in step 1734. The transaction ID consists of an internal transaction counter per MAS application. In step 1735 a sender inbox of an advertising module is updated for new individual advertisements and then, if any, new messages are uploaded to the mC Client on the mobile device.

The transaction is successfully completed, the transaction session between the mC client and the MAS application is terminated and if the network connection is not currently shared with other phone applications, it is also terminated in steps 731, 1736.

Figs. 8A, 8B, 8C, 8D, 8E and 8F show a flow chart of a second variant of a handset-to-an external stationary device procedure.

In comparison to the first variant, in this method the receiver path is represented by stationary device 120 connected to the MAS application over internet network, instead of mobile device connected over mobile operator network, and the transaction and user data are exchanged manually between involved parties, instead of using NFC technology.

The receiver user, as prerequisite of using second variant, has to apply for a special 'receiver internet identity' within the Mobility Account System. This identity is treated as customer individual ID number recognizable within the MAS application environment and is manually entered by the sender user during transaction initiation.

A preparation of the financial operation is done in the steps 801-805, 1801-1806 and 1815-1816. The internet receiver path is initiated by the selecting mC transaction method on the internet page in step 802 and the sender path is activated by starting mC Client on the mobile device 1801-1804. In step 803, the transaction request is forwarded using secured connection to the mC transaction page with embedded the internet mC client, namely the outer module of internet transactions 70. The internet receiver public identity and transaction data, namely a receiver individual internet identity, an amount of the financial operation, an age limit (if any activated), an additional payment title, a user public name and logo of the internet receiver, are displayed on the internet page in step 805. In step 804 a sender transaction ID has to be entered manually on the page, using PC keyboard or virtual one, to complete the receiver transaction form. The completed transaction request is sent for authorization in step 806. In parallel the mC client of the sender path is activated in steps 1801-1804, and then the unique transaction ID of sender is displayed on the mobile device, sender private and public identity are composed and buffered for further transaction proceeding in step 1805 and finally the receiver transaction and user data, namely the receiver internet identity and amount of the financial operation, are entered manually in step 1806.

In the case, the transaction is initiated by an application on the mobile device (e.g. ticket selling service, etc.), the process of taking possession of the receiver/sender transaction and user identity data can be performed directly and automatically between the involved transaction parties, and the mC client of the sender user continues with further process of the transaction authorization. No separated client account is needed for the ticket application.

The mC client of sender can support the multi bank accounts environment exactly in the same way as described in Fig.6A. In step 1815 a prefix of the selected bank account and an actual session data, namely the serving cell ID and the session IP address, are loaded and then provided to the MAS application, and the transaction authorization PIN of the sender user is entered in step 1816 for further transaction proceeding.

Steps 1808-1814 of the sender, which include the procedure of mobile device authorization (1808-1812) and setup communication channel (1813-1814), are performed identically to the first variant described. In step 808 of receiver internet path, the transaction request is sent to the internet gateway of the MAS application over internet using Hypertext Transfer Protocol Secure (https).

Both mC clients involved in the transaction are authorized by the MAS application in steps 809, 1817. The mC client settings, bank account data and public identity for corresponding internet identity of receiver being part of the internet receiver path process and the client settings, preferably bank account and public identity for corresponding private identity of sender being part of the sender path process are downloaded from the MAS database to the operational memory of central units and stored there until transaction completion. The sender public identity and the transaction ID are proofed whether they are equaled to the mC client profile and transaction ID of sender stored in the database. The similar process of comparison is performed for the internet receiver path. In step 1818 the transaction authorization PIN of sender is authorized. The sender user has three attempts (step 1819) to provide the correct PIN number otherwise the financial operation is terminated.

In step 1820, as part of the sender authorization process, status of the geographical service is checked whether it is activated. The cell ID of the serving network node, which is obtained by BSF client, reported via the mC client to the mC central unit, is compared with the reference cell ID stored in the MAS database in steps 1821. If two values are equal, namely the serving cell ID with the reference cell or cells ID, the transaction process is continued. If this comparison is not successful an error message is displayed in step 807 or 1807 and further transaction process is canceled.

In steps 810, 1822 the transaction title of receiver and of sender users is generated accordingly. The structure of transaction title is identical to the first variant described and is depicted in the Fig. 7G. The usage of specific information carried out by the transaction title is exactly the same as described previously.

The individual transaction data, namely the transaction amount, the transaction title of the sender and of the receiver, the transaction ID of the sender, an additional text of the receiver payment title, and user identity data, namely the public identity of the sender and of the receiver, received from two independent sources, via sender and receiver parallel transaction paths, downloaded from the MAS database and generated during transaction process are exchanged between sender path and receiver path in steps 811, 1823, and then compared in step 1824 of sender. The bank account data of receiver is also exchanged in steps 811, 1823. In step 812 the base settings of additional transaction parameters are loaded and checked in step 813. It consists of checking a sender age limit and a level of the sender satisfaction index. When status of the age limit service is activated then the defined age limit of the receiver service is compared with the current age tag of sender and when the status of checking the sender satisfaction index is also activated then the level of the sender satisfaction index defined by the receiver is compared with the current sender satisfaction index. If both comparisons are positive the transaction is continued. In parallel the photo/logo with embedded text containing the public identity of the receiver is uploaded to the sender mobile device in step 1825 and confirmed by sender in steps 1826. The photo/logo and public name of the receiver displayed on the sender mobile device must be identical to information displayed on the internet transaction page of the receiver.

If the result of all perform authorizations and comparisons is positive, namely, (1) authorization of the mC Client as internet receiver, (2) authorization of the mC Client as sender, (3) the transaction authorization PIN of the sender, (4) proofing the sender reference cell ID of the geographical service if activated by sender, (5) comparison of transaction data and user data received via sender path and downloaded from the MAS database with the transaction data and user data received via receiver path and downloaded from the MAS database, (6) authorization of the receiver photo/logo with embedded text containing receiver public identity confirmed by sender, (7) authorization of an additional transaction parameters defined by the internet receiver user, the money transfer request from sender to receiver bank account is submitted to the CSM module in step 1827. The CSM module checks status of sender user, namely any defined and remained limit and the validity of sender mandate under SEPA and then, if it is positive, requests money transfer using the SEPA model. The method of CSM module interworking with banks is depicted in Fig. 5. The CSM module confirms to the central unit approval of money transfer in step 1828.

The sender path has a transaction lead and performs the mC transaction main watcher procedure. The transaction watcher procedure is depicted in the Fig. 8F and behaves exactly the same as described previously.

After final approval of the money transfer in step 1829 by CSM module, the confirmation of successful transaction is sent to the involved parties, both sender and internet receiver, in steps 814, 1830. Additionally the sender satisfaction index is updated accordingly in step 1830. The e-transfer module and the mC client embedded in the sender mobile device store data of the performed financial operation in steps 815, 1831. The latest transaction records are immediately available on-line on the internet e-transaction portal and can be reviewed locally by the sender mC client. These records can also be used as an electronic bill, printable if necessary, replacing the needs of the traditional paper bills of sales. New transaction ID for next incoming transaction is taken and provided to the mC client of sender path in step 1832. The transaction ID consists of an internal transaction counter per MAS application. In step 1833 a sender inbox of an advertising module is updated for new individual advertisements and then, if any, new messages are provided to the mC Client on the mobile device.

The transaction is successfully completed, the transaction session between the mC client and the MAS application is closed in steps 816, 1834 and if the network connection of sender is not currently shared with other phone applications, it is also terminated in steps 1834.

The transaction watcher procedure, which is depicted in the Fig. 8F, collects information about transaction events of both involved transaction paths. Each new transaction event of the involved parties is collected in step 817 of the receiver and step 1835 of the sender and then combined together in step 1836. In step 1837 most up-to-dated image of the transaction status is constantly taken and confirmed in step 1838 until either the 3rd unsuccessful attempt of providing the correct authorization PIN has been detected in step 1839, or any negative (NO) event status, excluding step 1818, has been recognized in step 1840, or approval of the money transfer request has been detected in step 1841, or the transaction time has been exceeded in step 1842. When either step 1839 or step 1840 or step 1842 has reached status 'yes', the reason of this interruption is proofed and stored in step 1843 and then the financial operation is stopped in step 1844. Each transaction path stores the latest transaction status and data in step 818, 1845, cancels the remaining transaction steps 819, 1846. When step 1841 has obtained status 'yes', then the confirmation of successful transaction completion is sent to the involved parties (both sender and receiver) and displayed accordingly in steps 814, 1830. Additionally, the receiver payment title is displayed by the sender mobile device and the sender satisfaction index is automatically updated in step 1830.

To summarize, the invention is related to a method for performing financial operations by using an initiating mobile device with integrated sender and receiver functions and communicating with a beneficing device with integrated receiver function and optional sender function, each having a Mobility Account System Client (mC Client) being able to communicate with the financial services environments by using a Mobility Account System application residing in a central unit, which is able to communicate with the Mobility Account System Client of the initiating mobile device and the Mobility Account System Client of the beneficing device to perform the financial operations and at least the initiating mobile device having a Mobile Network Operator Client (BSF Client) being able to communicate with a mobile operator network and a Near Field Communication module (NFC module) being able to exchange the transaction data and mC client identity data. The method comprises preferably following steps: activating the mC client in the initiating mobile device and in the beneficing device, preparing a financial operation by loading the mC client identity data and collecting the transaction data of the initiating mobile device and of the beneficing device, initiating a financial operation by taking possession of the mC client identity data and the transaction data of the initiating mobile device and of the beneficing device, authorizing financial operation by the initiating mobile device, authorizing the initiating mobile device and optionally the beneficing device in the mobile operator network, requesting a session key and an associated session ID for performing encryption and decryption process of secured communication channel, setting up a secured channel for performing the financial operation using the session key and the associated session ID, providing an actual session data of the initiating mobile device and the beneficing device, exchanging mC client identity data and the transaction data between the initiating mobile device and its financial service environment and between the beneficing device and its financial service environment, authorizing the initiating mobile device and the beneficing device into the transaction services environments, proofing the geographical location of the initiating mobile device and optionally the beneficing device if feature activated by the users, generating a transaction title of the financial operation for the initiating mobile device and for the beneficing device, exchanging mC client identity data and the transaction data of the initiating mobile device and of the beneficing device within the transaction services environments using a unique transaction ID, checking an additional transaction parameters, confirming the financial operation by at least the initiating mobile device, completing the financial operation when the transaction authorizations are positive, sending confirmation to the initiating mobile device and to the beneficing device that the financial operation is completed, updating a satisfaction index of the initiating mobile device, storing data of the performed financial operation of the initiating mobile device and of the beneficing device, providing new transaction ID to the initiating mobile device as well as checking the advertising inbox of initiating mobile device for new advertisements and terminating transaction session of the initiating mobile device and of the beneficing device to the transaction service environments.

While the present invention has been depicted, described, and is defined by reference to particular preferred embodiments of the invention, such references in the foregoing specification do not imply a limitation on the invention. It will, however, be evident that various modifications and changes may be made thereto without departing from the broader scope of the invention. The presented preferred embodiments of the invention are exemplary only, and are not exhaustive of the scope of the invention.

## Claims

1. A method for performing financial operations by using an initiating mobile device with integrated sender and receiver functions and communicating with a beneficing device with integrated receiver function and optional sender function, from which at least the initiating mobile device has a Mobility Account System Client (mC Client), a Mobile Network Operator Client (BSF Client), and a Near Field Communication module (NFC module) and works within a mobile operator network, and each communicating with the financial services environments by using an Mobility Account System application residing in a central unit, which is able to communicate with the Mobility Account System Client of the initiating mobile device and the Mobility Account System Client of the beneficing device to perform the financial operations, the method comprising following steps:
activating the mC client in the initiating mobile device and in the beneficing device;
preparing a financial operation by loading the mC client identity data and collecting the transaction data of the initiating mobile device and of the beneficing device;
initiating a financial operation by taking possession of the mC client identity data and the transaction data of the initiating mobile device and of the beneficing device;
authorizing financial operation by the initiating mobile device;
authorizing the initiating mobile device and optionally the beneficing device in the mobile operator network;
requesting a session key and an associated session ID for performing encryption and decryption process of secured communication channel for at least the initiating mobile device;
setting up a secured channel for performing the financial operation using the session key and the associated session ID or secured internet connection;
providing an actual session data of the initiating mobile device and the beneficing device;
exchanging mC client identity data and the transaction data between the initiating mobile device and its financial service environment and between the beneficing device and its financial service environment;
authorizing the initiating mobile device and the beneficing device into the transaction services environments;
proofing the geographical location of the initiating mobile device and optionally the beneficing device if feature activated by the users;
generating a transaction title of the financial operation for the initiating mobile device and for the beneficing device;
exchanging mC client identity data and the transaction data of the initiating mobile device and of the beneficing device within the transaction services environments using a unique transaction ID;
checking an additional transaction parameters;
confirming the financial operation by at least the initiating mobile device;
completing the financial operation when the transaction authorizations are positive;
sending confirmation to the initiating mobile device and to the beneficing device that the financial operation is completed;
updating a satisfaction index of the initiating mobile device;
storing data of the performed financial operation of the initiating mobile device and of the beneficing device;
providing new transaction ID to the initiating mobile device;
checking the advertising inbox of the initiating mobile device for new advertisements and
terminating transaction session of the initiating mobile device and of the beneficing device to the transaction service environments.

2. The method for performing financial operations according to claim 1 wherein the initiating mobile device is a mobile handset and the beneficing device is a mobile handset or a Point of Sales device.

3. The method for performing financial operations according to claim 1 wherein the initiating mobile device is a mobile handset and the beneficing device is an external stationary device, preferably a PC or a network server.

4. The method for performing financial operations according to claim 1 wherein the session key and the associated session ID are requested from a BSF server for each valid session of the financial operation.

5. The method for performing financial operations according to claim 1 wherein during the activation of the mC Client of the initiating mobile device and optionally of the beneficing device an mC client PIN is entered using alphanumeric keys of the initiating mobile device and optionally of the beneficing device.

6. The method for performing financial operations according to claim 1 wherein during the preparation of the financial operation, a value of the financial operation is set by the beneficing device, the mC Client Public Identity of the initiating mobile device and the beneficing device is either loaded to the Near Field Communication module or displayed on the internet page, the mC Client Private Identity of the initiating mobile device and the beneficing device is either composed and loaded to the Near Field Communication module or displayed on the internet page, and the transaction ID of the initiating mobile device is either loaded to the Near Field Communication module or displayed on the phone display.

7. The method for performing financial operations according to claim 1 wherein the exchanging individual transaction data and mC clients identity data of the initiating mobile device and the beneficing device between the initiating mobile device and the beneficing device, is performed either via Near Field Communication modules of the initiating mobile device and the beneficing device or via manual entering by using a phone key-board and PC keyboard or via direct exchanging between the involved applications if both parties are located on the mobile device.

8. The method for performing financial operations according to claim 1 wherein during the confirmation of the transaction operation, transaction data and user identity data are received from the initiating mobile device and the beneficing device and downloaded from the database and generated during transaction process and then are compared.

9. The method for performing financial operations according to claim 1 wherein during the confirmation of the transaction operation, photo/logo of the beneficing device is uploaded to the initiating mobile device and confirmed by the user of the initiating mobile device, and optionally photo/logo of the initiating mobile device is uploaded to the beneficing device and confirmed by the user of the beneficing device and the authorization of the transaction additional parameters, namely a sender age limit and a level of the sender satisfaction index, by the beneficing device are proofed if required by user of the beneficing device.

10. The method for performing financial operations according to claim 1 wherein the money transfer request is submitted to the Clearing and Settlement Mechanism module (CSM module) when the authorization of the mC Client as the initiating mobile device, the authorization of the mC Client as the beneficing device, checking transaction authorization PIN of the initiating mobile device, proofing the geographical location of the initiating mobile device if activated by user, optionally proofing the geographical location of the beneficing device and if activated by user, the comparison of transaction data and user data received from the initiating mobile device, and downloaded from the database with the transaction data and user data received from the beneficing device and downloaded from the database, the authorization of the receiver user photo/logo with embedded text containing its public name confirmed by the initiating mobile device, and optionally the authorization of sender photo/logo with embedded text containing its public name confirmed by the beneficing device, are positive and additional transaction parameters pertaining the sender are fulfilled.

11. The method for performing financial operations according to claim 1 wherein the transaction title of the financial operation comprises transaction data and users data identity of the initiating mobile device and the beneficing device taken from database, either an additional unique ID (Add ID) of the initiating mobile device or an additional unique ID (Add ID) of the beneficing device, and either ZIP code of the initiating mobile device or ZIP code of the beneficing device, and either an age tag and a satisfaction index of the initiating mobile device or the sales category of the beneficing device, and the current transaction ID consisting of an internal transaction counter per mobility account system application, and date and time of the current transaction session.

12. The method for performing financial operations according to claim 1 wherein the transaction unique data, enabling the financial operation to be performed, are the transaction amount, the transaction titles and the bank accounts of the initiating mobile device and of the beneficing device, and a unique transaction ID of the initiating mobile device, and an additional payment title of the beneficing device.

13. A mobility account system for performing financial operations by using an initiating mobile device with an integrated sender and receiver functions and communicating with a beneficing device with an integrated receiver function and optional sender function, each having a Mobility Account System Client and a Near Field Communication module, and each working with a mobile operator network being able to communicate with the financial services environments by using an Mobility Account System application, which is able to communicate with the Mobility Account System Client of the initiating mobile device and the Mobility Account System Client of the beneficing device to perform a financial operation **characterized in that** the initiating mobile device and the beneficing device in addition to the Mobility Account System Client and the Near Field Communication module have a BSF Client for an authorization of the mobile device in the mobile operator network and providing a session key and an associated session ID for setting up secured channel connection in cooperation with the Mobility Account System application for transmitting the user identity data and transaction unique data enabling the financial operations to be performed.

14. The mobility account system for performing financial operations according to claim 13, wherein the sender and receiver functions are realized by a key-board (14, 24) with a Sender-key (S-key) (15, 25) and a Receiver-key (R-key) (16, 26) and a graphical user interface (17, 27).

15. The mobility account system for performing financial operations according to claim 13, wherein the initiating mobile device is a mobile handset and the beneficing device is a mobile handset or a Point of Sales device.
